# EUROPEAN PATENT APPLICATION

(11) **EP 4 822 849 A1**
(43) Date of publication of application: **14.10.2026**
(21) Application number: 24923119.2
(22) Date of filing: 15.04.2024
(51) Int. Cl.: H01M 50/244, H01M 50/249, H01M 50/24, H01M 10/625, H01M 10/6556, H01M 10/6568, H01M 50/289, H01M 50/242

(54) **BATTERY AND ELECTRICAL DEVICE**

(30) Priority: 06.02.2024 CN 202410172495
(71) Applicant: Contemporary Amperex Technology Co., Limited, Ningde, Fujian 352100 (CN)
(72) Inventor: GUO, Xinfei, Ningde, Fujian 352100 (CN); XU, Jialong, Ningde, Fujian 352100 (CN)
(74) Representative: Ziebig Hengelhaupt Intellectual Property Attorneys Patentanwaltskanzlei PartGmbB
(86) International application number: PCT/CN2024/087802
(87) International publication number: WO 2025/166894

(57) **Abstract**

A battery (100) and an electrical apparatus (1000). The battery (100) includes a box body assembly (20), the box body assembly (20) including a box body (21), and the box body (21) being an integrally stamped member having a bottom wall (211) and an enclosure (212); a battery cell assembly (101), the battery cell assembly (101) being arranged inside the box body assembly (20) and fixedly connected to the bottom wall (211) of the box body (21); and a first heat exchange assembly (20), the first heat exchange assembly (20) being arranged inside the box body assembly (20) and exchanges heat with the battery cell assembly (101). Sealing effect and structural strength of the box body (21) can be improved, reliability of the battery (100) can be enhanced, costs can be reduced, and production efficiency can be improved.

## Description

### CROSS-REFERENCE TO RELATED APPLICATIONS

The present application is based on and claims priority to Chinese patent application No. 202410172495.X filed on February 06, 2024, which is incorporated herein by reference in its entirety.

### TECHNICAL FIELD

The present application relates to the field of battery technologies, and in particular to a battery and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is also an important factor related to their development.

Poor sealing of a box body of a battery in the related art leads to low battery reliability.

### SUMMARY OF THE INVENTION

In view of the above problems, the present application provides a battery and an electrical apparatus, which can improve sealing performance and structural strength of a box body, thereby improving the reliability of the battery.

In a first aspect, the present application provides a battery, including: a box body assembly, a battery cell assembly, and a first heat exchange assembly. The box body assembly includes a box body, the box body being an integrally stamped member having a bottom wall and an enclosure. The battery cell assembly is arranged inside the box body assembly and is fixedly connected to the bottom wall of the box body. The first heat exchange assembly is arranged inside the box body assembly and exchanges heat with the battery cell assembly.

In the technical solution according to an embodiment of the present application, since the bottom wall and the enclosure of the box body are integrally stamped, there is no need to consider a sealing problem at a connection between the bottom wall and the enclosure, and sealing effect can be improved. This can prevent mud and water from seeping into the box body from the connection between the bottom wall and the enclosure and affecting the battery cell assembly inside the box body, thereby improving the reliability of the battery. Furthermore, the integrally stamped box body does not require splicing, which on the one hand saves a large number of bolts on an original profile box body to reduce costs, and on the other hand eliminates connection steps to improve the production efficiency. In addition, the integrally stamped box body can prevent a substance ejected from the battery during thermal runaway and a heat exchange fluid leaking from the first heat exchange assembly from flowing to the outside of the box body. This can reduce direct contact between the human body and the leaked substances, protect personal safety, and also reduce environmental pollution.

In some embodiments, the first heat exchange assembly includes a first heat exchange member, and the first heat exchange member includes: a heat exchange body, the heat exchange body being at least partially arranged between the bottom wall of the box body and the battery cell assembly, and the heat exchange body having a heat exchange flow channel; and a current collector in communication with the heat exchange flow channel.

In the above technical solution, the heat exchange body of the first heat exchange member is at least partially arranged between the bottom wall of the box body and the battery cell assembly, so that the heat exchange body of the first heat exchange member is in direct contact with a bottom of the battery cell assembly. The heat exchange body can exchange heat with each battery cell of the battery cell assembly, which is beneficial to improving heat exchange efficiency.

In some embodiments, an accommodating groove is provided on an inner surface of the bottom wall of the box body; and the heat exchange body is at least partially accommodated in the accommodating groove.

In the above technical solution, providing the accommodating groove can, on the one hand, position the heat exchange body, reduce the risk of shaking of the heat exchange body, and improve mounting stability and reliability of the heat exchange body, thereby improving the reliability of the battery. On the other hand, it can increase a connection area between the heat exchange body and the bottom wall of the box body, thereby improving the reliability of the heat exchange body being fixed on the box body. In addition, the battery cell assembly can be in contact with the bottom wall of the box body and the heat exchange body, the heat exchange efficiency can be improved, thereby further enhancing the reliability of the battery. In addition, the accommodating groove is provided on the bottom wall of the box body, so that the bottom wall of the box body has a concave-convex structure, which can improve structural strength of the box body. The heat exchange body is at least partially arranged in the accommodating groove, which is equivalent to a reinforcing structure of the box body, thereby being capable of further improving the structural strength of the box body.

In some embodiments, the heat exchange flow channel includes a first heat exchange portion, the first heat exchange portion includes a plurality of first heat exchange segments arranged at intervals, and the accommodating groove includes a plurality of first groove segments arranged at intervals, the plurality of first heat exchange segments being arranged in the plurality of first groove segments in a one-to-one correspondence.

In the above technical solution, by arranging the heat exchange flow channel to include the plurality of first heat exchange segments, the plurality of first heat exchange segments can be distributed at different positions on the bottom wall of the box body to meet heat exchange requirements. Arranging the accommodating groove to include the plurality of first groove segments can, on the one hand, position the plurality of first heat exchange segments, making the arrangement of the heat exchange flow channel more stable, and further improving the heat exchange efficiency, thereby improving the reliability of the battery. On the other hand, a relatively complex concave-convex structure can be formed on the bottom wall of the box body, thereby improving structural strength of the box body and further improving the reliability of the battery.

In some embodiments, the battery cell assembly includes a plurality of battery units, each of the battery units includes a plurality of battery cells, the plurality of battery cells of each of the battery units are arranged in a first direction, the plurality of battery units are arranged in a second direction, and the first direction and the second direction are arranged to form an angle; where the plurality of first heat exchange segments are arranged at intervals in the first direction and each of the first heat exchange segments extends in the second direction, and the plurality of first groove segments are arranged at intervals in the first direction and each of the first groove segments extends in the second direction.

In the above technical solution, by defining the arrangement directions of the plurality of first heat exchange segments and the extension direction of each of the first heat exchange segments, the plurality of battery cells in each of the battery units can be in contact with the plurality of first heat exchange segments, and each of the first heat exchange segments can be in contact with the plurality of battery units, thereby making the heat exchange of the plurality of battery cells more uniform and improving the reliability of the battery. Furthermore, by defining the arrangement directions of the plurality of first groove segments and the extension direction of each of the first groove segments, the plurality of first groove segments can position the plurality of first heat exchange segments, so that the arrangement of the heat exchange flow channel is more stable, which can further improve the heat exchange efficiency and further increase the structural strength of the box body, thereby improving the reliability of the battery.

In some embodiments, the first heat exchange portion further includes a first bent segment, and the first bent segment is arc-shaped and is bent and connected between two adjacent first heat exchange segments. The accommodating groove further includes a connecting groove segment, and the connecting groove segment is arc-shaped and is bent and connected between two adjacent first groove segments. The first bent segment is arranged on the connecting groove segment.

In the above technical solution, by arranging the first bent segment, a direction of fluid flow inside the first heat exchange portion can be changed, and a smooth transition connection between the two first heat exchange segments can be achieved, thereby realizing a detour arrangement of the first heat exchange portion. As a result, a contact area between a single battery cell and the first heat exchange portion can be increased, thereby increasing the heat exchange area and improving heat exchange efficiency of the first heat exchange portion. Meanwhile, the first bent segment is arc-shaped, which can reduce flow resistance of the fluid and reduce pressure drop, thereby increasing a flow rate of the fluid and further increasing the heat exchange efficiency of the first heat exchange portion. In addition, the arrangement of the first bent segment makes the structure of the first heat exchange portion more compact and occupies less overall space, which is more conducive to miniaturization of the battery and improves a volumetric energy density of the battery. In addition, by setting the accommodating groove to include the connecting groove segment, the connecting groove segment can perform position-limiting on the first bent segment, so that arrangement of heat exchange flow channels is more stable, thereby further improving the heat exchange efficiency, and further improving the reliability of the battery.

In some embodiments, the heat exchange flow channel further includes a second heat exchange portion. The second heat exchange portion is bent to form a U-shaped region. One end of the first heat exchange portion is bent and connected to one end of the second heat exchange portion, and the first heat exchange portion is bent and arranged within the U-shaped region. The first heat exchange portion and the second heat exchange portion are bent in a same plane. The accommodating groove further includes a second groove segment, and one end of the second groove segment is bent and connected to one end of the first groove segment. The shape of the second groove segment is the same as the shape of the second heat exchange portion, and the second heat exchange portion is arranged on the second groove segment.

In the above technical solution, by bending the second heat exchange portion to form the U-shaped region, and bending the first heat exchange portion to be arranged in the U-shaped region, when the first heat exchange member exchanges heat with the battery cell assembly, the U-shaped region formed by the outer second heat exchange portion can be aligned with outer battery cells of the battery, and the first heat exchange portion within the U-shaped region can be aligned with inner battery cells. This allows the first heat exchange member to compensate for a temperature difference between the inner and outer battery cells caused by heat exchange between the outer battery cells and the environment, so that the heat exchange effects of the outer battery cells of the battery cell assembly and the inner battery cells of the battery cell assembly are more consistent, thereby improving the temperature uniformity of the battery, and thus improving the service life of the battery to a certain extent. In addition, by arranging the accommodating groove to further include the second groove segment, the second groove segment can perform position-limiting on the second heat exchange portion, so that the arrangement of heat exchange flow channels is more stable, thereby further improving the heat exchange efficiency, and further improving the reliability of the battery.

In some embodiments, there is one heat exchange flow channel, which is simple in structure and more convenient to control.

In some embodiments, there are a plurality of heat exchange flow channels, and the plurality of heat exchange flow channels are arranged in parallel, with their projections on the bottom wall of the box body not overlapping. In the above technical solution, by arranging the plurality of heat exchange flow channels, on the one hand, a length of a single heat exchange flow channel can be reduced and arrangement of a single heat exchange flow channel can be simplified, thereby improving the heat exchange efficiency and improving the reliability of the battery. On the other hand, the arrangement, arrangement position, and distribution area of the plurality of heat exchange flow channels can be selected as needed, thereby meeting different heat exchange requirements.

In some embodiments, the heat exchange body includes a flat tube, and the flat tube defines the heat exchange flow channel. The flat tube is arranged in the accommodating groove, and two walls of the flat tube arranged opposite each other in a thickness direction are respectively fixedly connected to the battery cell assembly and the bottom wall of the box body assembly.

In the above technical solution, the heat exchange body is configured to include the flat tube. On the basis of reducing the material cost, on the one hand, it can increase a contact area between the heat exchange body and the battery cell assembly, improve the heat exchange efficiency, and thus improve the reliability of the battery. On the other hand, the flat tube occupies less space, which is conducive to increasing the capacity of the battery and reducing the weight, volume, and cost of the battery.

In some embodiments, the heat exchange body includes a heat exchange plate and the heat exchange plate includes: a first plate portion; and a second plate portion, the second plate portion covering one side of the first plate portion in a thickness direction, and the heat exchange flow channel being defined between the second plate portion and the first plate portion; where the first plate portion is fixedly connected to the battery cell assembly, the second plate portion is fixedly connected to the bottom wall of the box body assembly, and the second plate portion has a protrusion and the protrusion is arranged in the accommodating groove.

In the above technical solution, the heat exchange flow channel can be defined by at least two plate portions, which can improve the connection reliability between the heat exchange body and the bottom wall of the box body, as well as between the heat exchange body and the battery cell assembly, while meeting the heat exchange requirements. Forming the protrusion on the second plate portion so that the protrusion fits the accommodating groove can, on the one hand, use the accommodating groove to position the second plate portion, improve the mounting stability and reliability of the heat exchange body, thereby enhancing the reliability of the battery. On the other hand, it can increase a connection area between the heat exchange body and the bottom wall of the box body, thereby improving the reliability of fixing the heat exchange body on the box body.

In some embodiments, the current collector includes: a tube body; a first flow channel interface, the first flow channel interface being connected to a first inlet/outlet of the heat exchange flow channel; a second flow channel interface, the second flow channel interface being connected to a second inlet/outlet of the heat exchange flow channel; and a partition structure, the partition structure being arranged inside the tube body, the partition structure separating the first flow channel interface and the second flow channel interface inside the tube body.

In the above technical solution, by arranging the tube body, the first inlet/outlet and the second inlet/outlet of the heat exchange flow channel are integrated. By arranging the partition structure inside the tube body, the first flow channel interface and the second flow channel interface are separated, so that the interior of the tube body may be partitioned, and the liquid inflow and outflow processes do not affect each other.

In some embodiments, there are a plurality of heat exchange flow channels, a plurality of first flow channel interfaces, and a plurality of second flow channel interfaces; where the plurality of first flow channel interfaces correspond one-to-one with and are connected to the first inlets/outlets of the plurality of heat exchange flow channels, and the plurality of second flow channel interfaces correspond one-to-one with and are connected to the second inlets/outlets of the plurality of heat exchange flow channels.

In the above technical solution, by arranging the plurality of first flow channel interfaces and the plurality of second flow channel interfaces, the current collector can be used to converge the plurality of first inlets/outlets of the plurality of heat exchange flow channels together, and converge the plurality of second inlets/outlets of the plurality of heat exchange flow channels together. On the one hand, the temperature of the heat exchange fluid in the plurality of heat exchange flow channels can be more balanced, thereby improving the heat exchange efficiency of the first heat exchange member and improving the reliability of the battery. On the other hand, it can facilitate the mounting of the first heat exchange member.

In some embodiments, the plurality of first flow channel interfaces are in communication inside the tube body; and/or, the plurality of second flow channel interfaces are in communication inside the tube body.

In the above technical solution, the current collector can be used to converge the plurality of first inlets/outlets of the plurality of heat exchange flow channels together, and converge the plurality of second inlets/outlets of the plurality of heat exchange flow channels together, so that the temperature of the heat exchange fluid in the plurality of heat exchange flow channels can be more balanced.

In some embodiments, there are a plurality of heat exchange flow channels and two current collectors. One of the current collectors has a plurality of liquid inflow interfaces, and the plurality of liquid inflow interfaces correspond one-to-one with and are connected to the first inlets/outlets of the plurality of heat exchange flow channels. The other one of the current collectors has a plurality of liquid outflow interfaces, and the plurality of liquid outflow interfaces correspond one-to-one with and are connected to the second inlets/outlets of the plurality of heat exchange flow channels.

In the above technical solution, by arranging two current collectors, with one of the current collectors configured for liquid inflow and the other one of the current collectors configured for liquid outflow, the structure of the current collectors can be simplified and the inflow and outflow of the heat exchange fluid can be conveniently controlled.

In some embodiments, the battery cell assembly includes a plurality of battery units, each of the battery units includes a plurality of battery cells, the plurality of battery cells of each of the battery units are arranged in a first direction, the plurality of battery units are arranged in a second direction, and the first direction and the second direction are arranged to form an angle; where the plurality of first heat exchange segments are arranged at intervals in the second direction and each of the first heat exchange segments extends in the first direction, and the plurality of first groove segments are arranged at intervals in the second direction and each of the first groove segments extends in the first direction.

In the above technical solution, by defining the arrangement directions of the plurality of first heat exchange segments and the extension direction of each of the first heat exchange segments, the plurality of battery cells in each of the battery units can be in contact with a same first heat exchange segment, and the plurality of battery units can be in contact with the plurality of first heat exchange segments, thereby making the heat exchange of the plurality of battery cells more uniform and improving the reliability of the battery. Furthermore, by defining the arrangement directions of the plurality of first groove segments and the extension direction of each of the first groove segments, the plurality of first groove segments can position the plurality of first heat exchange segments, so that the arrangement of the heat exchange flow channel is more stable, which can further improve the heat exchange efficiency, thereby improving the reliability of the battery.

In some embodiments, the heat exchange body includes a plurality of heat exchange tubes, the plurality of heat exchange tubes are arranged at intervals in the second direction, and each of the heat exchange tubes defines the first heat exchange segment. By configuring the heat exchange body to include the plurality of heat exchange tubes, the amount of material used in the heat exchange body can be reduced, thereby lowering costs.

In some embodiments, each heat exchange tube includes: a first tube segment, the first tube segment extending in the first direction and defining the first heat exchange segment; and two second tube segments, the two second tube segments both extending in a third direction, with one end of each of the two first tube segments in communication with both ends of the first tube segment and the other end in communication with the current collector. In the above technical solution, by configuring the heat exchange tube to the above structure, the structure of the heat exchange tube can correspond to the bottom wall and the enclosure of the box body, and the structure of the heat exchange tube can correspond to the bottom and the side of the battery cell assembly, thereby increasing the contact area between the heat exchange tube and the battery cell assembly, improving the heat exchange efficiency of the first heat exchange member, and thus improving the reliability of the battery.

In some embodiments, the heat exchange tube is a flat tube. In the above technical solution, the heat exchange body is configured to include the flat tube, and since the flat tube occupies less space, it is conducive to increasing the capacity of the battery and reducing the weight, volume, and cost of the battery.

In some embodiments, the heat exchange tube is provided with a reinforcing member therein. In the above technical solution, by arranging the reinforcing member inside the heat exchange tube, deformation resistance of the heat exchange tube can be improved, and the heat exchange tube can be in full contact with the battery cell assembly, thereby improving the heat exchange efficiency and further enhancing the reliability of the battery.

In some embodiments, the reinforcing member includes a plurality of reinforcing ribs, the plurality of reinforcing ribs are arranged at intervals in the second direction, and each of the reinforcing ribs is supported between two walls of the heat exchange tube arranged opposite each other in its thickness direction. In the above technical solution, by configuring the reinforcing member to include a plurality of reinforcing ribs, the deformation resistance of the heat exchange member in the third direction perpendicular to the second direction can be improved. On one hand, it can enhance the structural strength of the heat exchange tube and the reliability of the heat exchange member, thereby improving the reliability of the battery. On the other hand, it can ensure sufficient contact between the heat exchange tube and the battery cell assembly, improve the heat exchange efficiency, and further enhance the reliability of the battery.

In some embodiments, the heat exchange body further includes a fixing member, the fixing member is arranged between two adjacent heat exchange tubes, and the heat exchange body is connected to the box body through the fixing member. In the above technical solution, by arranging the fixing member, the heat exchange body can be fixed inside the box body, thereby improving the mounting stability and reliability of the heat exchange body, and thus improving the reliability of the battery.

In some embodiments, the box body is provided with a first fixed beam and a second fixed beam, the first fixed beam and the second fixed beam are arranged at an interval in the first direction, and length directions thereof both extend in the second direction, and the battery cell assembly is located between the first fixed beam and the second fixed beam; where the fixing member is connected to the box body through the first fixed beam or the second fixed beam. In the above technical solution, by arranging the first fixed beam and the second fixed beam, the structural strength of the box body can be improved, thereby enhancing the reliability of the battery. On the other hand, the fixing member of the heat exchange body can be fixed to the first fixed beam or the second fixed beam, thereby fixing the heat exchange body inside the box body. Without damaging the structure of the box body, the mounting stability and reliability of the first heat exchange member inside the box body can be improved, thereby further enhancing the reliability of the battery.

In some embodiments, the current collector includes: a first current collecting tube and a second current collecting tube, the first current collecting tube and the second current collecting tube are arranged at an interval in the first direction, length directions thereof both extend in the second direction, and both ends of each of the heat exchange tubes are in communication with the first current collecting tube and the second current collecting tube respectively. In the above technical solution, by configuring the current collector to include the first current collecting tube and the second current collecting tube, and having both ends of each of the plurality of heat exchange tubes in communication with the first current collecting tube and the second current collecting tube, the plurality of heat exchange tubes are arranged in parallel, so that the plurality of heat exchange tubes have relatively uniform temperature, which is conducive to improving the heat exchange effect and thus improving the reliability of the battery. In addition, the first current collector and the second current collector can be arranged at the top, so that they can be arranged opposite the enclosure of the box body. Therefore, there is no need to provide an opening at a lower position of the expansion beam, which eliminates the need for a sealing structure between the current collector, the expansion beam, and the bottom wall of the box body.

In some embodiments, the battery cell assembly includes a plurality of battery units, each of the battery units includes a plurality of battery cells, the plurality of battery cells of each of the battery units are arranged in the first direction, the plurality of battery units are arranged in the second direction, and the first direction and the second direction are arranged to form an angle. The box body is provided with an expansion beam, the expansion beam including a first expansion beam and a second expansion beam. The first expansion beam and the second expansion beam are arranged at an interval in the second direction, and length directions thereof both extend in the first direction. Each of the first expansion beam and the second expansion beam is provided with a cavity, and the battery cell assembly is located between the first expansion beam and the second expansion beam. In the above technical solution, by arranging the first expansion beam and the second expansion beam, when the battery cell of the battery cell assembly has an expansion tendency, the first expansion beam and the second expansion beam abut against the battery cell assembly, and deformation of the cavities of the first expansion beam and the second expansion beam is utilized to absorb and transmit an expansion force, thereby reducing the probability of the battery cell deforming due to the expansion force.

In some embodiments, the box body is provided with a first fixed beam and a second fixed beam, the first fixed beam and the second fixed beam are arranged at an interval in the first direction, length directions thereof both extend in the second direction, and the battery cell assembly is located between the first fixed beam and the second fixed beam; where both ends of each of the first expansion beam and the second expansion beam are connected to the first fixed beam and the second fixed beam respectively through a first fastener. In the above technical solution, by arranging the first fixed beam and the second fixed beam, the structural strength of the box body can be improved, thereby enhancing the reliability of the battery. On the other hand, each of the first expansion beam and the second expansion beam can be fixed between the first fixed beam and the second fixed beam, thereby fixing the first expansion beam and the second expansion beam inside the box body. Without damaging the structure of the box body, the mounting stability and reliability of the first expansion beam and the second expansion beam inside the box body can be improved, thereby further enhancing the reliability of the battery.

In some embodiments, at least one of the first expansion beam and the second expansion beam has a clearance hole for avoiding the current collector and/or the heat exchange body. In the above technical solution, by providing the clearance hole on the first expansion beam and/or the second expansion beam, interference caused by the first expansion beam and/or the second expansion beam to the mounting of the first heat exchange member can be reduced without affecting functions of the first expansion beam and/or the second expansion beam in absorbing and transmitting the expansion force. It also facilitates connection between the current collector of the first heat exchange member and a water nozzle on the box body.

In some embodiments, at least one of the first expansion beam and the second expansion beam includes: a support beam, the support beam extending in the first direction and fixedly connected to the bottom wall of the box body, and the support beam defining the clearance hole; and an expansion beam body, the expansion beam body extending in the first direction and connected to the support beam, and the expansion beam body defining the cavity. In the above technical solution, by configuring the first expansion beam and/or the second expansion beam to include the support beam and the expansion beam body, the support beam can provide a mounting position for the expansion beam without damaging the structure of the box body, which is conducive to improving the sealing performance of the bottom of the box body. When the battery cell of the battery cell assembly has an expansion tendency, the expansion beam body abuts against the battery cell assembly, and deformation of the cavity of the expansion beam body is utilized to absorb and transmit an expansion force, thereby reducing the probability of the battery cell deforming due to the expansion force.

In some embodiments, the support beam includes a plurality of support portions arranged at intervals in the first direction, with the clearance hole defined between two adjacent support portions. In the above technical solution, the support beam is configured to have the above structure. The clearance hole can be defined by two adjacent support portions. On the one hand, it is not necessary to provide an opening on the support beam, which simplifies the processing steps and is conducive to improving production efficiency and reducing costs. On the other hand, during assembling, the first heat exchange member can be placed in the box body from top to bottom first, and then the expansion beam body can be mounted. This can reduce the difficulty of mounting the first heat exchange member, thereby further improving production efficiency and reducing costs.

In some embodiments, the expansion beam body includes: a main body part, at least a portion of the main body part being arranged on a side of the plurality of support portions facing the battery cell assembly; and a connecting portion, the connecting portion being connected to a side of the main body part facing away from the battery cell assembly, and the connecting portion being connected to a side of the plurality of support portions facing away from the bottom wall of the box body; where the main body part and the connecting portion respectively cover at least a portion of the clearance hole. In the above technical solution, by configuring the expansion beam body to include the main body part and the connecting portion, when the battery cell of the battery cell assembly has an expansion tendency, the main body part abuts against the battery cell assembly, and deformation of the cavity of the main body part is utilized to absorb and transmit an expansion force, thereby reducing the probability of the battery cell deforming due to the expansion force. Arranging the connecting portion allows the main body part to be connected to the support beam, thereby achieving mounting of the expansion beam body. In addition, by covering at least a portion of the clearance hole with the main body part and the connecting portion, on the one hand, the impact of providing the clearance hole on the structural strength of the first expansion beam or the second expansion beam can be reduced. On the other hand, a contact area between the first expansion beam or the second expansion beam and the battery cell assembly can be increased, thereby improving the absorption and transmission of the expansion force by the first expansion beam or the second expansion beam, and thus improving the reliability of the battery.

In some embodiments, the support beam is welded to the bottom wall of the box body, and the expansion beam body is connected to a side of the support beam facing away from the bottom wall of the box body by a second fastener. In the above technical solution, by connecting the expansion beam body and the support beam with the second fastener, assembling and disassembling operations of the expansion beam body and the support beam are made simpler, which is conducive to improving the production efficiency of the battery and facilitating the maintenance and replacement of components.

In some embodiments, the expansion beam body is manufactured using an extrusion process to define the cavity. The expansion beam body is manufactured using the extrusion process, which allows for the extrusion of complex cross-sections according to design requirements. This reduces the quantity of components in the expansion beam body, eliminates the need for assembling steps of a plurality of components of the expansion beam body, and makes the mounting of the expansion beam body more convenient, thereby improving the production efficiency.

In some embodiments, at least one of the first expansion beam and the second expansion beam includes: a plurality of plates, the plurality of plates being stacked and connected in the second direction, the plates extending in the first direction, the cavity being defined between at least two of the plates, and the clearance hole penetrating through the plurality of plates. In the above technical solution, by using the plurality of separately formed plates to form the first expansion beam or the second expansion beam, the processing difficulty of each component can be reduced, thereby reducing production costs and improving the production efficiency.

In some embodiments, the plate is manufactured using a stamping process. The plurality of plates manufacturing using the stamping process can be stamped into different structures as needed. The forming process is simple, reducing processing difficulty and production costs. By assembling the plurality of plates, the cavity can be defined, and deformation of the cavity can be used to absorb and transfer an expansion force, thereby reducing the probability of battery cell deforming due to the expansion force.

In some embodiments, in the second direction, the current collector is connected to one side of the heat exchange body, and the clearance hole is provided on a side of the first expansion beam or the second expansion beam facing the bottom wall of the box body. In the above technical solution, the clearance hole is provided on the side of the first expansion beam or the second expansion beam facing the bottom wall of the box body, so that the current collector or the heat exchange body does not need to be bent upward or bend too much upward, which can simplify the structure of the current collector or heat exchange body. In addition, with this arrangement, the first expansion beam or the second expansion beam can be stopped above the current collector or the heat exchange body, thereby further limiting the first heat exchange member and improving the mounting reliability of the first heat exchange member.

In some embodiments, the current collector includes: a first current collecting tube and a second current collecting tube, the first current collecting tube and the second current collecting tube are arranged at an interval in the first direction, length directions thereof both extend in the second direction, and the clearance hole is arranged on a side of the first expansion beam or the second expansion beam facing away from the bottom wall of the box body. In the above technical solution, by arranging the clearance hole on the side of the first expansion beam or the second expansion beam facing away from the bottom wall of the box body, the first current collector and the second current collector can be arranged at the top, so that they can be arranged opposite the enclosure of the box body, which eliminates the need for a sealing structure between the current collector, the expansion beam, and the bottom wall of the box body.

In some embodiments, at least one of the first expansion beam and the second expansion beam is connected to a support member on a side facing away from the battery cell assembly, and the support member is connected to the bottom wall of the box body or the enclosure of the box body. In the above technical solution, the support member can be used to support the first expansion beam or the second expansion beam, which can effectively improve the overall structural strength and rigidity of the first expansion beam or the second expansion beam, reduce the probability of the first expansion beam or the second expansion beam tilting, and thus improve the reliability of the battery.

In some embodiments, the first expansion beam is provided with a first mounting member, the second expansion beam is provided with a second mounting member. The battery further includes a pull rope, and two ends of the pull rope are respectively connected to the first mounting member and the second mounting member. In the above technical solution, by configuring each of the first mounting member and the second mounting member to the above structure, it is convenient to disassemble and assemble the pull rope.

In some embodiments, there are a plurality of first mounting members, a plurality of second mounting members, and a plurality of pull ropes, with the plurality of first mounting members and the plurality of second mounting members arranged in the first direction, and two ends of the plurality of pull ropes respectively connected to the plurality of first mounting members and the plurality of second mounting members in a one-to-one correspondence. In the above technical solution, connecting the first expansion beam and the second expansion beam with the plurality of pull ropes can better resist a pressing force exerted by the battery cell assembly on the first expansion beam and the second expansion beam, which further reduces the probability of the first expansion beam or the second expansion beam tilting with respect to a vertical direction and the first direction, and thus improves the reliability of the battery.

In some embodiments, the battery cell assembly includes a plurality of battery units, each battery unit includes a plurality of battery cells, the plurality of battery cells of each battery unit are arranged in the first direction, the plurality of battery units are arranged in the second direction, and the first direction and the second direction are arranged to form an angle. The first heat exchange assembly further includes a second heat exchange member, the second heat exchange member being arranged between two adjacent battery units. In the above technical solution, by arranging the second heat exchange member, a contact area between the battery cell and the heat exchange assembly can be increased, thereby increasing the contact area between the battery cell assembly and the first heat exchange assembly, which can significantly improve the heat exchange efficiency and improve the reliability of the battery.

In some embodiments, the box body assembly further includes a box cover, the box cover being connected above the box body and having a top wall; the first heat exchange assembly further includes a third heat exchange member, the third heat exchange member being located at least partially between a top wall of the box cover and the battery cell assembly. In the above technical solution, by arranging the third heat exchange member, a contact area between the battery cell assembly and the first heat exchange assembly can be increased, which can significantly improve the heat exchange efficiency and improve the reliability of the battery.

In some embodiments, the battery further includes a second heat exchange assembly, and the second heat exchange assembly is attached externally to the box body. In the above technical solution, by arranging the second heat exchange assembly to the outside of the box body, there is no need to consider problems such as insulation and corrosion prevention of the heat exchange member and the battery cells inside the box body. This simplifies the insulation and corrosion prevention design of the second heat exchange assembly, reduces the processing difficulty and production cost, solves a short circuit problem between the battery cells and the second heat exchange assembly, and improves the reliability of the battery. Moreover, by arranging the second heat exchange assembly outside the box body assembly, the second heat exchange assembly does not occupy the space inside the box body, so that the capacity of the battery is not reduced due to the mounting of the heat exchange member, thus ensuring the capacity of the battery.

In a second aspect, the present application provides an electrical apparatus, including the battery in the above embodiment.

In the technical solution provided by the embodiment of the present application, the battery is adopted, which can improve the use reliability of the electrical apparatus, and can further improve the production efficiency of the electrical apparatus and reduce costs.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component. In the drawings:
FIG. 1 is a schematic structural diagram of a vehicle according to some embodiments of the present application;
FIG. 2 is an exploded structural diagram of a battery according to some embodiments of the present application;
FIG. 3 is a partially assembly diagram of a battery according to some embodiments of the present application from one perspective;
FIG. 4 is a partially assembly diagram of a battery according to some embodiments of the present application from another perspective;
FIG. 5 is an enlarged view of a portion V shown in FIG. 4;
FIG. 6 is a top view of the battery shown in FIG. 4;
FIG. 7 is a schematic structural diagram of a first heat exchange member of a battery according to another embodiment of the present application;
FIG. 8 is a schematic structural diagram of a first heat exchange member of a battery according to still another embodiment of the present application;
FIG. 9 is a partially assembly diagram of a battery according to yet other embodiments of the present application;
FIG. 10 is a sectional structural diagram along a line A-A in FIG. 9;
FIG. 11 is a sectional structural diagram along a line B-B in FIG. 9;
FIG. 12 is a partial enlarged view of the structure shown in FIG. 11;
FIG. 13 is a partially assembly diagram of a battery according to other embodiments of the present application;
FIG. 14 is a schematic structural diagram of a first heat exchange member of the battery shown in FIG. 13;
FIG. 15 is a top view of the battery shown in FIG. 13;
FIG. 16 is a sectional structural diagram along a line C-C in FIG. 15;
FIG. 17 is a partial enlarged view of the structure shown in FIG. 16;
FIG. 18 is a sectional structural diagram along a line D-D in FIG. 15;
FIG. 19 is a partial enlarged view of the structure shown in FIG. 18;
FIG. 20 is a schematic structural diagram of a box body and the like of the battery shown in FIG. 13;
FIG. 21 is a schematic structural diagram of a current collector of a battery according to still other embodiments of the present application;
FIG. 22 is a sectional structural diagram of the current collector shown in FIG. 21;
FIG. 23 is a partially assembly diagram of a battery according to other embodiments of the present application from one perspective;
FIG. 24 is a partially assembly diagram of a battery according to still other embodiments of the present application from another perspective;
FIG. 25 is an exploded structural diagram of the battery shown in FIG. 24;
FIG. 26 is an enlarged view of a portion E shown in FIG. 25;
FIG. 27 is a top view of the battery shown in FIG. 24;
FIG. 28 is a sectional structural diagram along a line F-F in FIG. 24;
FIG. 29 is a partial enlarged view of the structure shown in FIG. 28;
FIG. 30 is a sectional structural diagram along a line G-G in FIG. 24;
FIG. 31 is a partially assembly diagram of a battery according to yet other embodiments of the present application;
FIG. 32 is a structural sectional diagram of a battery cell and a second heat exchange member shown in FIG. 31; and
FIG. 33 is a partially assembly diagram of a battery according to yet other embodiments of the present application.

Reference numerals in specific embodiments are as follows:
Electrical apparatus 1000, Battery 100, Battery cell assembly 101, Battery unit 102, Controller 200, Motor 300,
Battery cell 10,
Box body assembly 20, Box body 21, Bottom wall 211, Enclosure 212, Accommodating groove 213, First groove segment 2131, Connecting groove segment 2132, Second groove segment 2133, Mounting groove 214, Box cover 22,
First heat exchange assembly 30, First heat exchange member 31, Heat exchange flow channel 310, First heat exchange portion 3101, First heat exchange segment 3102, First bent segment 3103, Second heat exchange portion 3104, U-shaped region 3104a, Second heat exchange segment 3105, Second bent segment 3106, Third heat exchange segment 3107, Third heat exchange portion 3109, First inlet/outlet 3109a, Second inlet/outlet 3109b, Heat exchange body 312, Heat exchange plate 313, First plate portion 3131, Second plate portion 3132, Protrusion 3133, Heat exchange tube 314, First tube segment 3141, Second tube segment 3142, Reinforcing member 3143, Reinforcing rib 3144, Fixing member 3145, Current collector 315, Tube body 3151, First space 3151a, Second space 3151b, First flow channel interface 3152, Second flow channel interface 3153, Partition structure 3154, First partition plate 3154a, Second partition plate 3154b, Liquid inflow interface 3155, Liquid outflow interface 3156, First current collecting tube 3157, Second current collecting tube 3158, Hose 316, Second heat exchange member 32, Third heat exchange member 33, Second heat exchange assembly 40,
First fixed beam 51, Second fixed beam 52, Connecting beam 53, Expansion beam 60, First expansion beam 61, Second expansion beam 62, Cavity 6301, Clearance hole 6302, Support beam 64, Support portion 641, Expansion beam body 65, Main body part 651, Connecting portion 652, Plate 66, Outer support plate 661, Inner support plate 662, Reinforcing plate 663, First fastener 67, Second fastener 68, Third fastener 69,
Support member 71, First mounting member 72, Second mounting member 73, Mounting portion 741, Fixing portion 742, Pull rope 75, First mounting beam 81, Second mounting beam 82, Bottom guard plate 90.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first," "second," etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix," etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand thereof in the market is also constantly expanding.

The battery in the related technology includes a square profile frame, a water-cooling plate, and a bottom guard plate located below the water-cooling plate. There is foam between the bottom guard plate and the water-cooling plate, and the bottom guard plate and the square profile frame are connected by a large number of bolts. However, it is difficult to achieve a sealed connection between the bottom guard plate and the square profile frame, which allows mud and water to seep into a box body from the connection between the bottom guard plate and the square profile frame, affecting a battery cell assembly and thus affecting reliability of the battery. In addition, the box body has many structural components, resulting in complex assembling steps, low production efficiency, and high costs.

Therefore, a battery is proposed in embodiments of the present application, in which an integrally stamped box body is used to replace the original profile box body, and it is unnecessary to consider the sealing performance between a bottom wall and an enclosure of the box body. This can prevent mud and water from seeping into the box body from the connection between the bottom wall and the enclosure and affecting a battery cell assembly inside the box body, thereby improving the reliability of the battery. Furthermore, the integrally stamped box body does not require splicing, which can save a large number of bolts on the original profile box body to reduce costs, and eliminates connection steps to improve the production efficiency.

The battery disclosed by the embodiment of the present application can be used in an electrical apparatus using the battery as a power source or various energy storage systems using the battery as an energy storage element. The electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiments, for the convenience of illustration, take a vehicle being an electrical apparatus 1000 in one embodiment of the present application as an example to illustrate.

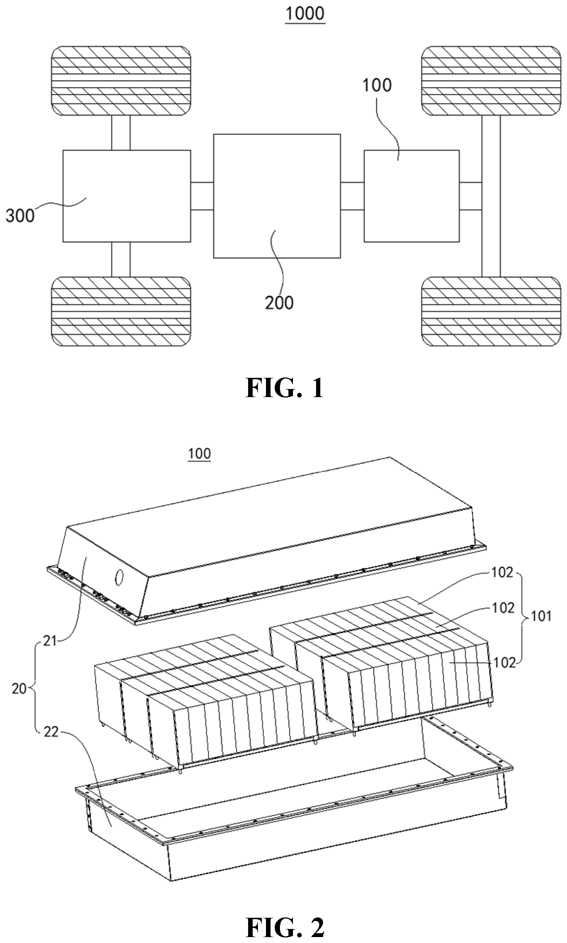

With reference to FIG. 1, FIG. 1 is a schematic structural diagram of a vehicle according to some embodiments of the present application. The vehicle may be a fuel vehicle, a gas vehicle or a new energy vehicle, and the new energy vehicle may be a pure electric vehicle, a hybrid electric vehicle or an extended-range vehicle and the like. A battery 100 is provided inside the vehicle. The battery 100 may be provided at the bottom, or head, or tail of the vehicle. The battery 100 may be used to power the vehicle. For example, the battery 100 may be used as an operating power source of the vehicle. The vehicle may further include a controller 200 and a motor 300. The controller 200 is used to control the battery 100 to supply power to the motor 300, for example, for the operating power demand when the vehicle is starting, navigating, and driving.

In some embodiments of the present application, the battery 100 can be used as an operation power supply of the vehicle, can also be used as a driving power supply of the vehicle, and replaces or partially replaces fuel oil or natural gas to provide driving power for the vehicle.

Referring to FIG. 2, FIG. 2 is an exploded diagram of a battery 100 according to some embodiments of the present application. The battery 100 includes a box body assembly 20 and at least one battery cell assembly 101. The battery cell assembly 101 is accommodated within the box body assembly 20.

Here, the box body assembly 20 is configured to provide an accommodating space for a battery cell 10, and the box body assembly 20 may be of various structures. In some embodiments, the box body assembly 20 may include a box body 21 and a box cover 22, the box body 21 and the box cover 22 cover each other, and the box body 21 and the box cover 22 jointly define the accommodating cavity for accommodating the battery cell 10. The box body 21 may be a hollow structure with one opening end, the box cover 22 may be a platy structure, and the box cover 22 covers on the opening side of the box body 21, such that the box body 21 and the box cover 22 jointly define the accommodating space. Alternatively, the box body 21 and the box cover 22 may each be a hollow structure with one opening side, and the opening side of the box cover 22 covers on the opening side of the box body 21. Of course, the box body assembly 20 formed by the box body 21 and the box cover 22 may be of various shapes, such as a cylinder and a cuboid.

The battery cell assembly 101 may include a plurality of battery cells 10. The plurality of battery cells 10 may be connected in series, in parallel, or in parallel-series, and the parallel-series connection means that the plurality of battery cells 10 are connected in both series and parallel. The plurality of battery cells 10 may be directly connected in series, in parallel, or in parallel-series, and then the entirety formed by the plurality of battery cells 10 is accommodated in the box body assembly 20. Of course, the battery 100 may also be an entirety formed by connecting the plurality of battery cells 10 in series, in parallel, or in parallel-series to form battery 100 modules and then connecting the plurality of battery 100 modules in series, in parallel, or in parallel-series, and is then accommodated in the box body assembly 20. The battery 100 may further include other structures. For example, the battery 100 may further include a bus component for electrically connecting the plurality of battery cells 10.

Each battery cell 10 may be a secondary battery or a primary battery; and may also be a lithium-sulfur battery, a sodium-ion battery, or a magnesium-ion battery, but is not limited thereto. The battery cell 10 may be in a cylindrical, flat, or cuboid shape, or in other shapes.

The battery cell 10 includes a shell cover, a shell body, an electrode assembly, and other functional components.

The shell cover refers to a component that covers the opening of the shell body to isolate the internal environment of the battery cell 10 from the external environment. Without limitation, the shape of the shell cover may be adapted to the shape of the shell body to fit the shell body. Optionally, the shell cover may be made of a material (such as aluminum alloy) with a certain hardness and strength, and in this way, the shell cover is not easily deformed when being subjected to extrusion and collisions, such that the battery cell 10 is capable of having a higher structural strength, and the reliability can also be improved. A functional component such as the electrode terminal may be arranged on the shell cover. The electrode terminal can be configured to be electrically connected to the electrode assembly, to output or input electric energy from or into the battery cell 10. In some embodiments, the shell cover may be further provided with a pressure relief mechanism configured to relief an internal pressure when the internal pressure or temperature of the battery cell 10 reaches a threshold. The shell cover may be made of various materials, such as copper, iron, aluminum, stainless steel, aluminum alloy, and plastic, which is not particularly limited in the embodiments of the present application. In some embodiments, an insulating member may be further arranged on an inner side of the shell cover, and the insulating member may be configured to isolate an electrical connection component 652 in the shell body from the shell cover, thereby reducing the risk of short circuit. For example, the insulating member may be made of plastic, rubber, and the like.

The shell body is an assembly configured to fit the shell cover to form the internal environment of the battery cell 10, where the formed internal environment can be used for accommodating the electrode assembly, an electrolyte solution, and other components. The shell body and the shell cover may be separate components, the shell body may be provided with an opening, and the internal environment of the battery cell 10 is formed by causing the shell cover to cover the opening at the opening. Without limitation, the shell cover and the shell body may also be integrated. Specifically, the shell cover and the shell body may form a common connecting surface before other components enter the shell. When the interior of the shell body is required to be encapsulated, the shell body is covered by the shell cover. The shell body may be of various shapes and dimensions, such as a cuboid, a cylinder, and a hexagonal prism. Specifically, the shape of the shell body may be determined according to the specific shape and dimension of the electrode assembly. The shell body may be made of various materials, such as copper, iron, aluminum, stainless steel, aluminum alloy, and plastic, which is not particularly limited in the embodiments of the present application.

The electrode assembly is a component of the battery cell 10 where an electrochemical reaction occurs. One or more electrode assemblies may be included within the shell body. The electrode assembly is mainly formed by winding or stacking a positive electrode plate and a negative electrode plate, and a separator is generally arranged between the positive electrode plate and the negative electrode plate. The portions, with active materials, of the positive electrode plate and the negative electrode plate constitute a main body part 651 of the electrode assembly, and the portions, without the active materials, of the positive electrode plate and the negative electrode plate respectively constitute tabs. In a charging or discharging process of the battery 100, the positive active material and the negative active material react with the electrolytic solution, and the tabs are connected to the electrode terminal to form a current loop.

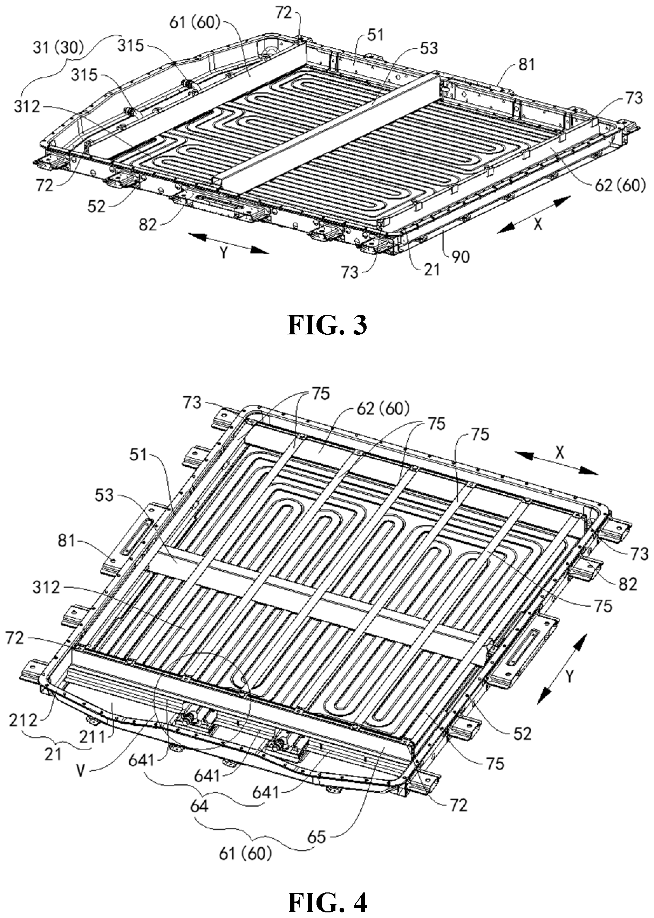

According to some embodiments of the present application, referring to FIG. 2, and further referring to FIG. 3 and FIG. 4, FIG. 3 is a partially assembly diagram of a battery 100 according to some embodiments of the present application from one perspective; and FIG. 4 is a partially assembly diagram of a battery 100 according to some embodiments of the present application from another perspective. The box body assembly 20 includes the box body 21. The box body 21 is an integrally stamped member with a bottom wall 211 and an enclosure 212. That is, there is no connecting seam between the bottom wall 211 and the enclosure 212 of the box body 21.

The battery 100 further includes a battery cell assembly 101 and a first heat exchange assembly 30. Both the battery cell assembly 101 and the first heat exchange assembly 30 are arranged inside the box body assembly 20, and the battery cell assembly 101 is fixedly connected to the bottom wall 211 of the box body 21. The first heat exchange assembly 30 exchanges heat with the battery cell assembly 101. By arranging the first heat exchange assembly 30 inside the box body assembly 20, the first heat exchange assembly 30 can be in direct contact with the battery cell assembly 101, thereby improving the heat exchange efficiency of the first heat exchange assembly 30 and thus improving the reliability of the battery 100.

In the technical solution according to the embodiment of the present application, since the bottom wall 211 and the enclosure 212 of the box body 21 are integrally stamped and formed, there is no need to consider a sealing problem at a connection between the bottom wall 211 and the enclosure 212, and sealing effect can be improved. This can prevent mud and water from seeping into the box body 21 from the connection between the bottom wall 211 and the enclosure 212 and affecting the battery cell assembly 101 inside the box body 21, thereby improving the reliability of the battery 100. Furthermore, the integrally stamped box body 21 does not require splicing, which on the one hand saves a large number of bolts on an original profile box body 21, reducing costs, and on the other hand eliminates connection steps, thereby improving the production efficiency.

In addition, the integrally stamped box body 21 can prevent a substance ejected from the battery 100 during thermal runaway and the heat exchange fluid leaking from the first heat exchange assembly 30 from flowing to the outside of the box body 21. This can reduce direct contact between the human body and the leaked substances, protect personal safety, and also reduce environmental pollution.

Referring to FIG. 3 again, the first heat exchange assembly 30 includes a first heat exchange member 31, and the first heat exchange member 31 includes a heat exchange body 312 and a current collector 315. The heat exchange body 312 is at least partially arranged between the bottom wall 211 of the box body 21 and the battery cell assembly 101, and the heat exchange body 312 has a heat exchange flow channel 310. The current collector 315 is in communication with the heat exchange flow channel 310, and the current collector 315 can act as a bus.

Specifically, in an embodiment where there is one heat exchange flow channel 310, the current collector 315 can integrate an inlet end and an outlet end of the heat exchange flow channel 310 into one unit.

In an embodiment where there are a plurality of heat exchange flow channels 310, the current collector 315 can integrate inlet ends of the plurality of heat exchange flow channels 310 and outlet ends of the plurality of heat exchange flow channels 310 into one unit. Alternatively, one current collector 315 may be used to integrate inlet ends of the plurality of heat exchange flow channels 310 into one unit, and another current collector 315 may be used to integrate outlet ends of the plurality of heat exchange flow channels 310 into one unit. Alternatively, one current collector 315 may be used to integrate an inlet end and an outlet end of one heat exchange flow channel 310 into one unit, and another current collector 315 may be used to integrate an inlet end and an outlet end of another heat exchange flow channel 310 into one unit.

In the above technical solution, the heat exchange body 312 of the first heat exchange member 31 is at least partially arranged between the bottom wall 211 of the box body 21 and the battery cell assembly 101, so that the heat exchange body 312 of the first heat exchange member 31 is in direct contact with a bottom of the battery cell assembly 101. The heat exchange body 312 can exchange heat with each battery cell 10 of the battery cell assembly 101, which is beneficial to improving heat exchange efficiency.

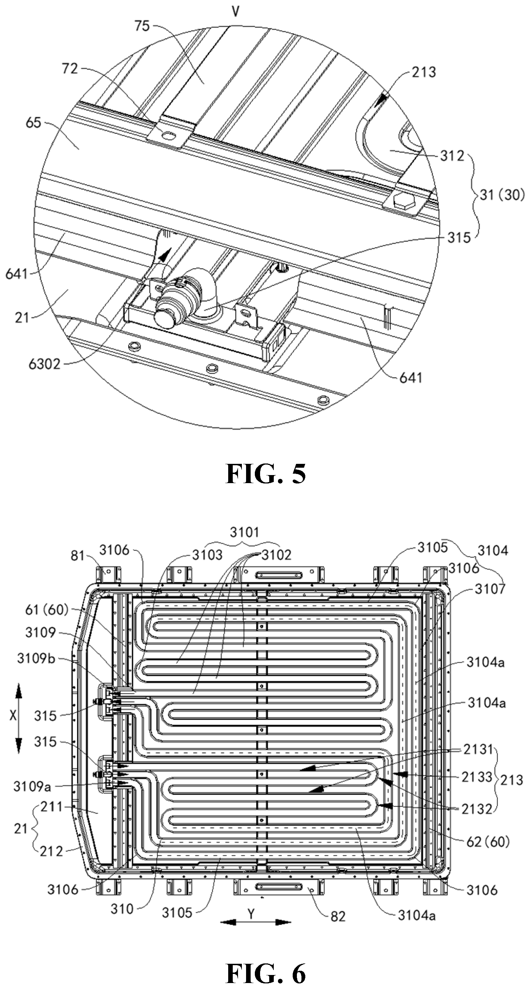

Referring to FIG. 3 and FIG. 4 again, and further referring to FIG. 5, FIG. 5 is an enlarged view of a portion V shown in FIG. 4. An accommodating groove 213 is provided on an inner surface of the bottom wall 211 of the box body 21, and the heat exchange body 312 is at least partially accommodated in the accommodating groove 213.

The accommodating groove 213 may be integrally formed during the stamping process of the box body 21, or the accommodating groove 213 may be separately processed after the box body 21 is formed by stamping.

The "accommodating groove 213" has a groove mouth, and the accommodating groove 213 is in communication with internal space of the box body 21 through the groove mouth. The heat exchange body 312 can be lower than a plane where the groove mouth of the accommodating groove 213 is located, so that the heat exchange body 312 can be mounted more stably in the accommodating groove 213. Of course, the heat exchange body 312 can protrude from the plane where the groove mouth of the accommodating groove 213 is located, so that the heat exchange body 312 can be in full contact with the battery cell assembly 101, thereby improving the heat exchange efficiency.

In the above technical solution, providing the accommodating groove 213 can, on the one hand, position the heat exchange body 312, reduce the risk of shaking of the heat exchange body 312, and improve mounting stability and reliability of the heat exchange body 312, thereby improving the reliability of the battery 100. On the other hand, it can increase a connection area between the heat exchange body 312 and the bottom wall 211 of the box body 21, thereby improving the reliability of the heat exchange body 312 being fixed on the box body 21.

In addition, the accommodating groove 213 is provided on the bottom wall 211 of the box body 21, so that the bottom wall 211 of the box body 21 has a concave-convex structure, which can improve structural strength of the box body 21. The heat exchange body 312 is at least partially arranged in the accommodating groove 213, which is equivalent to a reinforcing structure of the box body 21, thereby being capable of further improving the structural strength of the box body 21.

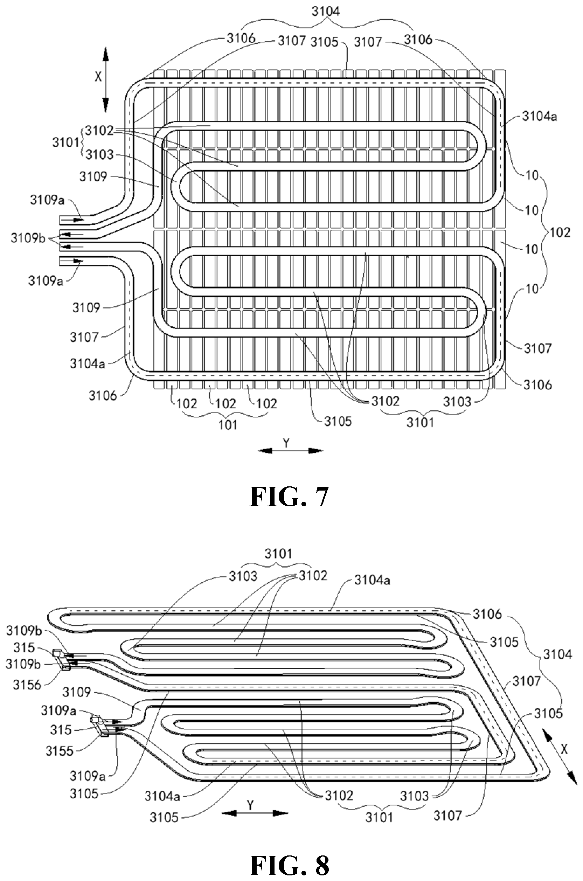

Referring to FIG. 6 to FIG. 8, FIG. 6 is a top view of the battery 100 shown in FIG. 4; FIG. 7 is a schematic structural diagram of a first heat exchange member 31 of a battery 100 according to another embodiment of the present application; and FIG. 8 is a schematic structural diagram of a first heat exchange member 31 of a battery 100 according to still another embodiment of the present application. The heat exchange flow channel 310 includes a first heat exchange portion 3101, the first heat exchange portion 3101 includes a plurality of first heat exchange segments 3102 arranged at intervals, and the accommodating groove 213 includes a plurality of first groove segments 2131 arranged at intervals, and the plurality of first heat exchange segments 3102 are arranged in the plurality of first groove segments 2131 in a one-to-one correspondence.

Specifically, an arrangement direction of the plurality of first heat exchange segments 3102 in the heat exchange flow channel 310 can be consistent with an arrangement direction of the plurality of first groove segments 2131, and an extension direction of a single first heat exchange segment 3102 can be consistent with an extension direction of a single first groove segment 2131, so that the plurality of first heat exchange segments 3102 can be arranged in the plurality of first groove segments 2131 in a one-to-one correspondence.

In the above technical solution, by arranging the heat exchange flow channel 310 to include the plurality of first heat exchange segments 3102, the plurality of first heat exchange segments 3102 can be distributed at different positions on the bottom wall 211 of the box body 21 to meet heat exchange requirements. Configuring the accommodating groove 213 to include the plurality of first groove segments 2131 can, on the one hand, position the plurality of first heat exchange segments 3102, making the arrangement of the heat exchange flow channel 310 more stable, and further improving the heat exchange efficiency, thereby improving the reliability of the battery 100. On the other hand, a relatively complex concave-convex structure can be formed on the bottom wall 211 of the box body 21, thereby improving structural strength of the box body 21 and further improving the reliability of the battery 100.

Referring to FIG. 7 again, the battery cell assembly 101 includes a plurality of battery units 102, each battery unit 102 includes a plurality of battery cells 10, the plurality of battery cells 10 of each battery unit 102 are arranged in the first direction, the plurality of battery units 102 are arranged in the second direction, and the first direction and the second direction are arranged to form an angle.

As shown in FIG. 7, for the battery cell assembly 101, an X direction in FIG. 7 is a width direction of the battery cell assembly 101, and a Y direction is a length direction of the battery cell assembly 101. For the battery cell 10, the X direction in FIG. 7 is the length direction of the battery cell 10, and the Y direction is the thickness direction of the battery cell 10. The battery cell assembly 101 includes a plurality of battery units 102, and the plurality of battery units 102 are arranged along a second direction. That is, the plurality of battery units 102 are stacked in the thickness direction of the battery cell 10. Each of the battery units 102 includes a plurality of battery cells 10, and the plurality of battery cells 10 of each of the battery units 102 are arranged in the first direction. That is, the plurality of battery cells 10 of each of the battery units 102 are stacked in the length direction of the battery cell 10.

Referring to FIG. 6 to FIG. 8, the plurality of first heat exchange segments 3102 are arranged at intervals in the first direction, and each of the plurality of first heat exchange segments 3102 extends in the second direction. The plurality of first groove segments 2131 are arranged at intervals in the first direction, and each of the first groove segments 2131 extends in the second direction. In other words, the arrangement direction of the first heat exchange segment 3102 is set to form an angle with the arrangement direction of the plurality of battery units 102, and the arrangement direction of the first heat exchange segment 3102 is consistent with the arrangement direction of the plurality of battery cells 10 in each of the battery units 102.

In the above technical solution, by defining the arrangement directions of the plurality of first heat exchange segments 3102 and the extension direction of each of the first heat exchange segments 3102, the plurality of battery cells 10 in each of the battery units 102 can be in contact with the plurality of first heat exchange segments 3102, and each of the first heat exchange segments 3102 can be in contact with the plurality of battery units 102, thereby making the heat exchange of the plurality of battery cells 10 more uniform and improving the reliability of the battery 100.

Furthermore, by defining the arrangement directions of the plurality of first groove segments 2131 and the extension direction of each of the first groove segments 2131, the plurality of first groove segments 2131 can position the plurality of first heat exchange segments 3102, so that the arrangement of the heat exchange flow channel 310 is more stable, which can further improve the heat exchange efficiency, thereby improving the reliability of the battery 100.

Referring to FIG. 6 to FIG. 8 again, the first heat exchange portion 3101 further includes a first bent segment 3103, the first bent segment 3103 is arc-shaped, and the first bent segment 3103 is bent and connected between two adjacent first heat exchange segments 3102.

The first bent segment 3103 is arc-shaped, that is, the first bent segment 3103 extends along an arc. Flow directions of the heat exchange fluid at both ends of the first bent segment 3103 have a certain angle. Thus, the first bent segment 3103 may change the flow direction of the heat exchange fluid, thereby allowing the two connected first heat exchange segments 3102 to extend and be arranged within a preset region. This increases the heat exchange area of the first heat exchange portion 3101 and improves the heat exchange efficiency of the first heat exchange portion 3101. Meanwhile, the first bent segment 3103 is arc-shaped. The arc-shaped bent structure can reduce flow resistance of the fluid and reduce pressure drop, thereby increasing a flow rate of the fluid and further increasing the heat exchange efficiency of the first heat exchange portion 3101.

Further, the quantity of the first bent segments 3103 may be one, two, three, or more. The first bent segment 3103 allows a detour arrangement of the first heat exchange portion 3101, thereby increasing the heat exchange area of the first heat exchange portion 3101 and improving the heat exchange efficiency of the first heat exchange portion 3101.

In an embodiment where there are two first heat exchange segments 3102, there is one first bent segment 3103. The first bent segment 3103 is bent and connected to the same end of the two first heat exchange segments 3102, thereby enabling the first heat exchange portion 3101 to form a U-shaped structure.

In an embodiment where there are more than two first heat exchange ends, there is more than one first bent segment 3103. The plurality of first bent segments 3103 are bent and connected between the same end of two adjacent first heat exchange segments 3102, thereby enabling the plurality of first heat exchange segments 3102 and the plurality of first bent segments 3103 to be connected alternately to form a multi-bent structure.

Correspondingly, the accommodating groove 213 further includes a connecting groove segment 2132, the connecting groove segment 2132 is arc-shaped, and the connecting groove segment 2132 is bent and connected between two adjacent first groove segments 2131. The first bent segment 3103 is arranged in the connecting groove segment 2132.

In other words, the structure of the first heat exchange portion 3101 can be configured to be the same as the structure of the first groove segment 2131 and the connecting groove segment 2132 of the accommodating groove 213. Thus, the first heat exchange portion 3101 can be limited in a plurality of directions by the first groove segment 2131 and the connecting groove segment 2132, thereby further improving the mounting reliability and stability of the heat exchange body 312.

In the above technical solution, by arranging the first bent segment 3103, a direction of fluid flow inside the first heat exchange portion 3101 can be changed, and a smooth transition connection between the two first heat exchange segments 3102 can be achieved, thereby realizing a detour arrangement of the first heat exchange portion 3101. As a result, a contact area between a single battery cell 10 and the first heat exchange portion 3101 can be increased, thereby increasing the heat exchange area and improving heat exchange efficiency of the first heat exchange portion 3101.

Meanwhile, the first bent segment 3103 is arc-shaped, which can reduce flow resistance of the fluid and reduce pressure drop, thereby increasing a flow rate of the fluid and further increasing the heat exchange efficiency of the first heat exchange portion 3101. In addition, the arrangement of the first bent segment 3103 makes the structure of the first heat exchange portion 3101 more compact and occupies less overall space, which is more conducive to miniaturization of the battery 100 and improves a volumetric energy density of the battery 100.

In addition, by configuring the accommodating groove 213 to include the connecting groove segment 2132, the connecting groove segment 2132 can perform position-limiting on the first bent segment 3103, so that arrangement of the heat exchange flow channels 310 is more stable, thereby further improving the heat exchange efficiency, and further improving the reliability of the battery 100.

In some specific examples of the present application, referring to FIG. 6 to FIG. 8, the first bent segment 3103 may be semi-circular.

In other words, the first bent segment 3103 may extend along a semi-circular arc. Specifically, the first bent segment 3103 may extend along a semi-circular arc that protrudes in a direction facing away from the two first heat exchange segments 3102 connected to the first bent segment 3103. An angle between an inlet and an outlet of the first bent segment 3103 is 180°, and flow directions at positions of the outlet and the inlet of the first bent segment 3103 are opposite. In this way, the two adjacent first heat exchange segments 3102 are closer together, and the structure of the entire first heat exchange portion 3101 is more compact and reliable. The first bent segment 3103 is configured to connect two first heat exchange segments 3102 that are arranged parallel to each other and spaced apart. In other embodiments, the bending degree of the first bent segment 3103 may be adjusted as needed, for example, it may be 150°, 135°, and the like, which is not limited in the embodiments of the present application.

Two first heat exchange segments 3102 are formed into a "U"-shaped pipe through the first bent segment 3103. The first heat exchange portion 3101 may contain one or more "U"-shaped pipes. The plurality of "U"-shaped pipes are connected end to end in sequence, and the connected "U"-shaped pipes are connected through the first bent segment 3103.

In the above technical solution, by arranging the first bent segment 3103 to be semi-circular arc shaped, the design diversity of the heat exchange body 312 may be increased, thereby improving the adaptability of the heat exchange body 312. At the same time, the semi-circular arc structure is relatively simple, thereby reducing the production difficulty of the heat exchange body 312 and increasing the production speed of the heat exchange body 312.

Referring to FIG. 6 to FIG. 8 again, the heat exchange flow channel 310 further includes a second heat exchange portion 3104. The second heat exchange portion 3104 is bent to form a U-shaped region 3104a. One end of the first heat exchange portion 3104 is bent and connected to one end of the second heat exchange portion 3101, and the first heat exchange portion 3101 is arranged within the U-shaped region 3104a. The first heat exchange portion 3101 and the second heat exchange portion 3104 are bent in a same plane.

The accommodating groove 213 further includes a second groove segment 2133, and the second groove segment 2133 is connected to the first groove segment 2131. The second heat exchange portion 3104 is arranged on the second groove segment 2133. In other words, the shape of the accommodating groove 213 can be consistent with the shape of the heat exchange flow channel 310, so that the accommodating groove 213 can be used to limit the heat exchange body 312 in a plurality of directions, so that the heat exchange body 312 fits well with the bottom wall 211 of the box body 21, thereby improving the mounting reliability and stability of the heat exchange body 312.

The statement that "the second heat exchange portion 3104 is bent to form a U-shaped region 3104a, and the first heat exchange portion 3101 is bent and arranged within the U-shaped region 3104a" is intended to illustrate that the second heat exchange portion 3104 is arranged on the circumferential periphery of the first heat exchange portion 3101, and may be arranged on three circumferential sides of the first heat exchange portion 3101. The second heat exchange portion 3104 may be arranged closer to the periphery of the battery with respect to the first heat exchange portion 3101.

The second heat exchange portion 3104 is bent to form the U-shaped region 3104a, that is, in the direction from one end of the second heat exchange portion 3104 to the other end, the second heat exchange portion 3104 extends along a U-shape line to form the U-shaped region 3104a assuming a U shape.

The first heat exchange portion 3101 is bent and arranged within the U-shaped region 3104a, that is, the first heat exchange portion 3101 is arranged within the space enclosed by the second heat exchange portion 3104, and the first heat exchange portion 3101 extends non-linearly on the inner side of the second heat exchange portion 3104, having at least one bending position.

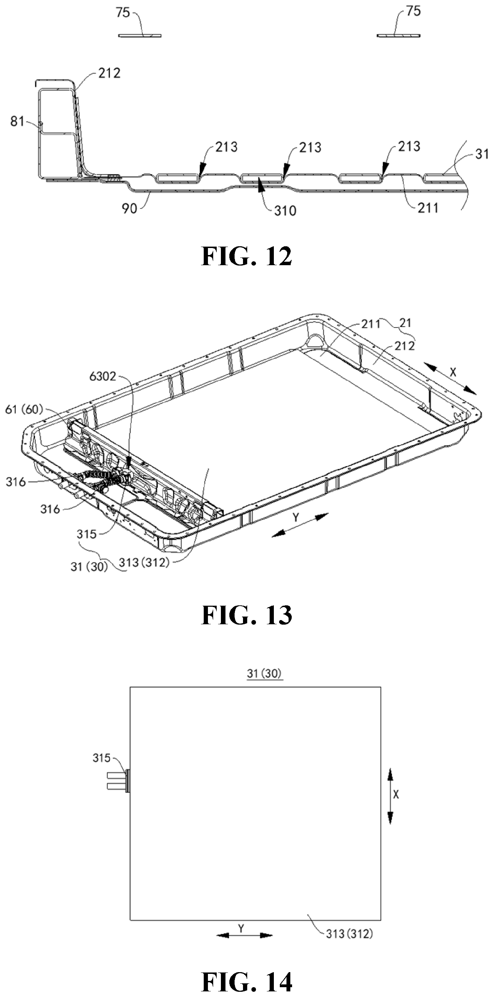

It should be noted that in this embodiment, it is only limited that the first heat exchange portion 3101 is bent and arranged within the U-shaped region 3104a, and a bending form of the first heat exchange portion 3101 is not limited. That is, the specific bending form of the first heat exchange portion 3101 may be designed according to the heat exchange requirements of the battery. For example, the first heat exchange portion 3101 may extend in the length direction of the battery cell 10 (that is, the X direction in FIG. 12), and after extending to a certain length, bend towards the width direction of the battery cell 10 (that is, the Y direction in FIG. 12), and then continue to extend in the length direction of the battery cell 10 and bend in the width direction. Alternatively, the first heat exchange portion 3101 may extend in the width direction of the battery cell 10, and after extending to a certain length, bend towards the length direction of the battery cell 10, and then continue to extend in the width direction of the battery cell 10 and bend in the length direction.

The first heat exchange portion 3101 and the second heat exchange portion 3104 are bent and connected. That is, one end of the first heat exchange portion 3101 and one end of the second heat exchange portion 3104 are connected, and a connection position between the first heat exchange portion 3101 and the second heat exchange portion 3104 is a non-linear structure with a bend. For example, the connection position between the first heat exchange portion 3101 and the second heat exchange portion 3104 may be bent into an arc segment.

The first heat exchange portion 3101 and the second heat exchange portion 3104 are connected. In this way, one of the end of the first heat exchange portion 3101 remote from the second heat exchange portion 3104 and the end of the second heat exchange portion 3104 remote from the first heat exchange portion 3101 may be used as a liquid inflow end and the other may be used as a liquid outflow end. Therefore, when the first heat exchange portion 3101 is performing heat exchange, a heat exchange fluid may flow from the first heat exchange portion 3101 to the second heat exchange portion 3104, or flow from the second heat exchange portion 3104 to the first heat exchange portion 3101.

The first heat exchange portion 3101 and the second heat exchange portion 3104 are bent in the same plane. Specifically, the first heat exchange portion 3101 and the second heat exchange portion 3104 can be bent in a plane perpendicular to a third direction. The plane may be parallel to a side of a surface of the battery cell assembly 101 in the third direction. This allows the heat exchange flow channel 310 to exchange heat with the battery cell assembly 101 in the same plane. As a result, the structure of the heat exchange flow channel 310 can be simplified, the production difficulty of the heat exchange flow channel 310 can be reduced, and the space occupied by the heat exchange flow channel 310 can also be reduced.

It is understandable that as the heat exchange fluid flows in the first heat exchange portion 3101, the temperature of the heat exchange fluid gradually changes, resulting in a gradual decrease in the heat exchange effect. For example, when the first heat exchange member 31 cools the battery cell assembly 101, the heat of the battery cell 10 is gradually transferred to the heat exchange fluid, causing the temperature of the heat exchange fluid to gradually increase as it flows in the first heat exchange portion 3101, and the temperature difference between the heat exchange fluid and the battery cell 10 gradually decreases, resulting in a gradual decrease in the heat exchange efficiency. When the first heat exchange member 31 heats the battery cell assembly 101, the heat in the heat exchange fluid is gradually transferred to the battery cell 10, causing the temperature of the heat exchange fluid to gradually decrease as it flows along the first heat exchange portion 3101, and the temperature difference between the heat exchange fluid and the battery cell 10 gradually decreases, resulting in a gradual decrease in the heat exchange efficiency.

When the first heat exchange member 31 cools the battery cell assembly 101, the heat exchange fluid may also flow from the first heat exchange portion 3101 to the second heat exchange portion 3104, but the heat exchange fluid may also flow from the second heat exchange portion 3104 to the first heat exchange portion 3101. When the heat exchange fluid also flows from the first heat exchange portion 3101 to the second heat exchange portion 3104, the battery cells 10 in the middle of the battery (i.e., the inner battery cells 10 on the inner side of the outer periphery) may be cooled first, and then the battery cells 10 at the periphery of the battery may be cooled. Since the heat dissipation of the battery cells 10 at the periphery of the battery is better than that of the inner battery cells 10, the lower-temperature heat exchange fluid in the first heat exchange portion 3101 can better meet the heat dissipation requirements of the battery cells 10 in the middle of the battery. At the same time, the battery cells 10 at the periphery can directly dissipate heat naturally towards the external environment, and therefore, even when the temperature of the heat exchange fluid in the second heat exchange portion 3104 is slightly higher, the heat dissipation requirements of the peripheral battery cells 10 can still be met. This results in the battery cells 10 at the periphery of the battery and the battery cells 10 in the middle of the battery receiving roughly the same cooling effect. Consequently, the battery cells 10 at the periphery of the battery and the battery cells 10 in the middle of the battery have relatively consistent temperatures after cooling, so that the temperature distribution inside the battery is more uniform.

When the first heat exchange member 31 heats the battery cell assembly 101, the heat exchange fluid may also flow from the first heat exchange portion 3101 to the second heat exchange portion 3104, but the heat exchange fluid may also flow from the second heat exchange portion 3104 to the first heat exchange portion 3101. For example, when the heat exchange fluid also flows from the second heat exchange portion 3104 to the first heat exchange portion 3101, the battery cells 10 at the periphery of the battery cell assembly 101 can be heated first, and then the heat exchange fluid cools the battery cells 10 in the middle position of the battery cell assembly 101. The battery cells 10 at the periphery of the battery dissipate more heat to the external environment, and the temperature of the battery cells 10 at the periphery of the battery is more easily dropped; therefore, the heat exchange fluid first heats the battery cells 10 at the periphery of the battery. The higher-temperature heat exchange fluid can compensate for the heat lost to the external environment from the battery cells 10 due to the heat dissipation, while increasing the temperature of the battery cells 10 at the periphery, thereby meeting their heating requirements. The battery cells 10 in the middle positions of the battery cell assembly 101 have smaller areas in contact with the external environment and have less heat loss. The lower-temperature heat exchange fluid flowing in the first heat exchange portion 3101, in cooperation with the heat generated by the battery cells 10 themselves, can better meet their heating requirements. This results in the battery cells 10 at the periphery of the battery and the battery cells 10 in the middle positions of the battery cell assembly 101 receiving roughly the same heating effect. Consequently, the battery cells 10 at the periphery of the battery and the battery cells 10 in the middle positions of the battery cell assembly 101 have relatively consistent temperatures after heating, so that the temperature distribution inside the battery is more uniform.

In the above technical solution, by bending the second heat exchange portion 3104 to form the U-shaped region 3104a, and bending the first heat exchange portion 3101 to be arranged in the U-shaped region 3104a, when the first heat exchange member 31 exchanges heat with the battery cell assembly 101, the U-shaped region 3104a formed by the outer second heat exchange portion 3104 can be aligned with outer battery cells 10 of the battery, and the first heat exchange portion 3101 within the U-shaped region 3104a can be aligned with inner battery cells 10. This allows the first heat exchange member 31 to compensate for a temperature difference between the inner and outer battery cells caused by heat exchange between the outer battery cells 10 and the environment, so that the heat exchange effects of the outer battery cells 10 of the battery cell assembly 101 and the inner battery cells 10 of the battery cell assembly 101 are more consistent, thereby improving the temperature uniformity of the battery, and thus improving the service life of the battery to a certain extent.

In addition, by arranging the accommodating groove 213 to further include the second groove segment 2133, the second groove segment 2133 can perform position-limiting on the second heat exchange portion 3104, so that the arrangement of heat exchange flow channels 310 is more stable, thereby further improving the heat exchange efficiency, and further improving the reliability of the battery 100.

Referring to FIG. 6 to FIG. 8, the heat exchange flow channel 310 further includes a third heat exchange portion 3109, the first heat exchange portion 3101 is connected between the third heat exchange portion 3109 and the second heat exchange portion 3104, one end of the third heat exchange portion 3109 is connected to the other end of the first heat exchange portion 3101, and the other end of the third heat exchange portion 3109 is connected to the current collector 315.

In the above technical solution, the heat exchange flow channel 310 is configured to include the first heat exchange portion 3101, the second heat exchange portion 3104, and the third heat exchange portion 3109. On the one hand, the heat exchange flow channel 310 can be connected to the thermal management assembly of the battery 100, and on the other hand, this allows the heat exchange flow channel 310 to form a bent structure, thereby increasing a contact area between the heat exchange flow channel 310 and the battery cell assembly 101, improving the heat exchange efficiency of the heat exchange flow channel 310, making a temperature of the battery cell assembly 101 more uniform, and further improving the reliability of the battery 100.

Optionally, there is one heat exchange flow channel 310, which is simple in structure and more convenient to control.

Optionally, there are a plurality of heat exchange flow channels 310, the plurality of heat exchange flow channels 310 are arranged in parallel, and projections of the plurality of heat exchange flow channels 310 on the bottom wall 211 of the box body 21 are not overlapping. For example, the plurality of heat exchange flow channels 310 may be arranged at intervals or arranged around each other.

In the above technical solution, by arranging the plurality of heat exchange flow channels 310, on the one hand, a length of a single heat exchange flow channel 310 can be reduced and arrangement of a single heat exchange flow channel 310 can be simplified, thereby improving the heat exchange efficiency and improving the reliability of the battery 100. On the other hand, the arrangement, arrangement position, and distribution area of the plurality of heat exchange flow channels 310 can be selected as needed, thereby meeting different heat exchange requirements.

In addition, arranging the plurality of heat exchange flow channels 310 may allow the heat exchange fluid to simultaneously exchange heat with different battery units 102 along the plurality of heat exchange flow channels 310, thereby improving the heat exchange efficiency of the battery cell assembly 101 and making the heat exchange effect of the battery cell assembly 101 better to a certain extent.

As shown in FIG. 6, in this embodiment, the first heat exchange body 312 includes three heat exchange flow channels 310. Each of the heat exchange flow channels 310 has a first inlet/outlet 3109a at one end and a second inlet/outlet 3109b at the other end. The first inlet/outlet 3109a of each of the three heat exchange flow channels 310 is connected to one of the current collectors 315, and the second inlet/outlet 3109b of each of the three heat exchange flow channels 310 is connected to another current collector 315.

Each of the heat exchange flow channels 310 includes a first heat exchange portion 3101, a second heat exchange portion 3104, and a third heat exchange portion 3109. Both ends of the first heat exchange portion 3101 are connected to one end of the second heat exchange portion 3104 and one end of the third heat exchange portion 3109 respectively; the other end of the second heat exchange portion 3104 is connected to one of the current collectors 315, and the other end of the third heat exchange portion 3109 is connected to another current collector 315.

The first heat exchange portion 3101 of each of the heat exchange flow channels 310 includes a plurality of first heat exchange segments 3102 and a plurality of first bent segments 3103. The plurality of first heat exchange segments 3102 are arranged in the first direction, and the length direction of each of the first heat exchange segments 3102 extends in the second direction. The plurality of first heat exchange segments 3102 are bent and connected end to end in sequence through the plurality of first bent segments 3103, thereby enabling the first heat exchange portion 3101 to form a multi-bent structure.

The second heat exchange portion 3104 of one of the heat exchange flow channels 310 is formed into a U-shaped structure, which allows it to be arranged on the outer periphery of the first heat exchange portion 3101 of the heat exchange flow channel 310 and the other two heat exchange flow channels 310. The second heat exchange portion 3104 of the heat exchange flow channel 310 includes two second heat exchange segments 3105 and a third heat exchange segment 3107. The two second heat exchange segments 3105 are arranged on opposite sides of the first heat exchange portion 3101, and each of the second heat exchange segments 3105 extend in the second direction. The third heat exchange segment 3107 extends in the first direction, one end of the third heat exchange segment 3107 and one end of one of the second heat exchange segments 3105 are bent and connected by a second bent segment 3106, and the other end of the third heat exchange segment 3107 and one end of the other of the second heat exchange segments 3105 are bent and connected by a second bent segment 3106. One end of the second heat exchange segment 3105 is in communication with the first heat exchange portion 3101 by the second bent segment 3106.

The second heat exchange portions 3104 of the other two heat exchange flow channels 310 are also each formed into a U-shaped structure, so that they can be arranged on the outer periphery of the first heat exchange portion 3101 of the corresponding heat exchange flow channel 310.

In the above technical solution, by arranging the two second heat exchange segments 3105 and the one third heat exchange segment 3107 on three sides of the first heat exchange portion 3101 respectively, the second heat exchange portion 3104 can surround the first heat exchange portion 3101, thereby increasing compactness of the arrangement of the first heat exchange portion 3101, and realizing miniaturization of the structure of the first heat exchange portion 3101, which is conducive to ensuring volumetric energy density of the battery 100. At the same time, the structure of the first heat exchange portion 3101 can further be simplified, thus facilitates the processing and production of the first heat exchange member 31.

As shown in FIG. 7, in this embodiment, the heat exchange body 312 defines two heat exchange flow channels 310. The two heat exchange flow channels 310 are arranged symmetrically about a central line extending in the second direction of the box body 21. One end of each of the heat exchange flow channels 310 has a first inlet/outlet 3109a at one end and a second inlet/outlet 3109b at the other end. The first inlet/outlet 3109a and the second inlet/outlet 3109b of each of the two heat exchange flow channels 310 are both connected to the same current collector 315.

Each of the heat exchange flow channels 310 includes a first heat exchange portion 3101, a second heat exchange portion 3104, and a third heat exchange portion 3109. Both ends of the first heat exchange portion 3101 are connected to one end of the second heat exchange portion 3104 and one end of the third heat exchange portion 3109 respectively; the other end of the second heat exchange portion 3104 is connected to one of the current collectors 315, and the other end of the third heat exchange portion 3109 is connected to another current collector 315.

The first heat exchange portion 3101 of each of the heat exchange flow channels 310 includes a plurality of first heat exchange segments 3102 and a plurality of first bent segments 3103. The plurality of first heat exchange segments 3102 are arranged in the first direction, and the length direction of each of the first heat exchange segments 3102 extends in the second direction. The plurality of first heat exchange segments 3102 are bent and connected in sequence through the plurality of first bent segments 3103, thereby enabling the first heat exchange portion 3101 to form a multi-bent structure.

The second heat exchange portion 3104 of each of the heat exchange flow channels 310 is formed into a U-shaped structure, which allows it to be arranged on the outer periphery of the first heat exchange portion 3101 of the heat exchange flow channel 310 and the other two heat exchange flow channels 310. The second heat exchange portion 3104 of the heat exchange flow channel 310 includes a second heat exchange segment 3105 and two third heat exchange segments 3107. The two third heat exchange segments 3107 are arranged on opposite sides of the first heat exchange portion 3101, and each of the third heat exchange segments 3107 extends in the first direction. The second heat exchange segment 3105 extends in the second direction, and both ends of the second heat exchange segment 3105 are respectively bent and connected to one end of each of the two third heat exchange segments 3107 by the second bent segment 3106. The other end of one of the third heat exchange segments 3107 is bent and connected to the first bent portion by the second bent segment 3106.

In the above technical solution, by configuring two symmetrically arranged heat exchange flow channels 310, the heat exchange fluid can be simultaneously introduced into both sides of the battery cell assembly 101 for heat exchange. A large inlet flow rate can shorten the length of a single heat exchange flow channel 310 and reduce the pressure drop within the current heat exchange flow channel 310, thereby significantly improving the heat exchange efficiency of the battery 100.

As shown in FIG. 8, in this embodiment, the first heat exchange body 312 defines two heat exchange flow channels 310. Each of the heat exchange flow channels 310 has a first inlet/outlet 3109a at one end and a second inlet/outlet 3109b at the other end. The first inlet/outlet 3109a of each of the two heat exchange flow channels 310 is connected to one of the current collectors 315, and the second inlet/outlet 3109b of each of the two heat exchange flow channels 310 is connected to another current collector 315.

Each of the heat exchange flow channels 310 includes a first heat exchange portion 3101, a second heat exchange portion 3104, and a third heat exchange portion 3109. Both ends of the first heat exchange portion 3101 are connected to one end of the second heat exchange portion 3104 and one end of the third heat exchange portion 3109 respectively; the other end of the second heat exchange portion 3104 is connected to one of the current collectors 315, and the other end of the third heat exchange portion 3109 is connected to another current collector 315.

The first heat exchange portion 3101 of each of the heat exchange flow channels 310 includes a plurality of first heat exchange segments 3102 and a plurality of first bent segments 3103. The plurality of first heat exchange segments 3102 are arranged in the first direction, and the length direction of each of the first heat exchange segments 3102 extends in the second direction. The plurality of first heat exchange segments 3102 are bent and connected in sequence through the plurality of first bent segments 3103, thereby enabling the first heat exchange portion 3101 to form a multi-bent structure.

The second heat exchange portion 3104 of one of the heat exchange flow channels 310 is formed into a U-shaped structure, which allows it to be arranged on the outer periphery of the first heat exchange portion 3101 of the heat exchange flow channel 310 and the other heat exchange flow channel 310. The second heat exchange portion 3104 of the heat exchange flow channel 310 includes two second heat exchange segments 3105 and a third heat exchange segment 3107. The two second heat exchange segments 3105 are arranged on opposite sides of the first heat exchange portion 3101, and each of the second heat exchange segments 3105 extend in the second direction. The third heat exchange segment 3107 extends in the first direction, one end of the third heat exchange segment 3107 and one end of one of the second heat exchange segments 3105 are bent and connected by a second bent segment 3106, and the other end of the third heat exchange segment 3107 and one end of the other of the second heat exchange segments 3105 are bent and connected by a second bent segment 3106. One end of the second heat exchange segment 3105 is in communication with the first heat exchange portion 3101 by the second bent segment 3106.

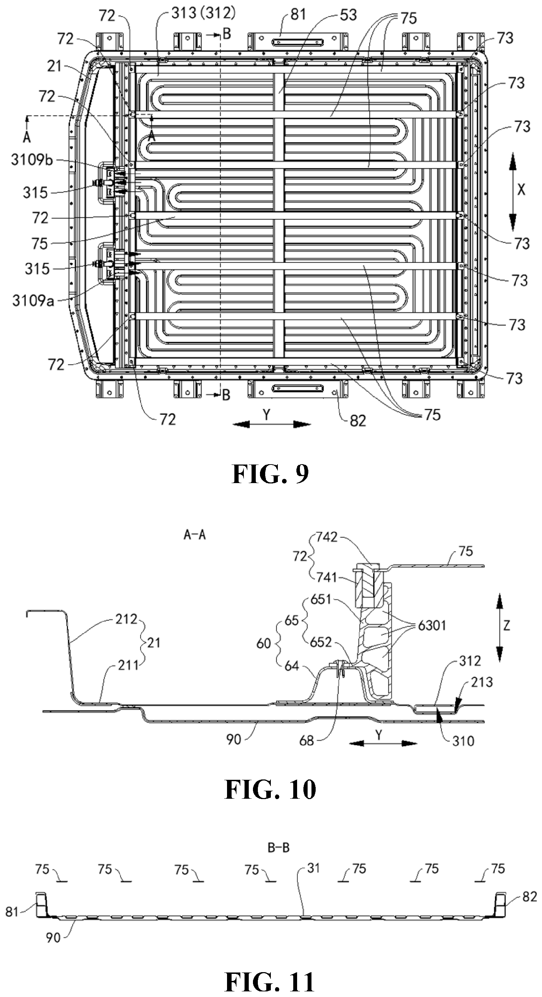

Referring to FIG. 9 to FIG. 12, FIG. 9 is a partially assembly diagram of a battery 100 according to yet other embodiments of the present application; FIG. 10 is a sectional structural diagram along a line A-A in FIG. 9; FIG. 11 is a sectional structural diagram along a line B-B in FIG. 9; and FIG. 12 is a partial enlarged view of the structure shown in FIG. 11. The heat exchange body 312 includes a flat tube, and the flat tube defines a heat exchange flow channel 310. Two walls of the flat tube in a thickness direction have flat surfaces and a large contact area, which can increase the heat transfer area and thus increase the heat exchange effect of the heat exchange body 312.

The flat tube is arranged in the accommodating groove 213, and the two walls of the flat tube arranged opposite each other in the thickness direction are respectively fixedly connected to the battery cell assembly 101 and the bottom wall 211 of the box body assembly 20.

In the above technical solution, the heat exchange body 312 is configured as the flat tube. On the basis of reducing the material cost, on the one hand, it can increase a contact area between the heat exchange body 312 and the battery cell assembly 101, improve the heat exchange efficiency, and thus improve the reliability of the battery 100. On the other hand, the flat tube occupies less space, which is conducive to increasing the capacity of the battery 100 and reducing the weight, volume, and cost of the battery 100.

According to some embodiments of the present application, the flat tube may be formed by bending a single tube.

Forming by bending a single tube means that the flat tube may be formed by bending a single straight tube multiple times through processing processes such as pressing and rolling. For example, a single straight tube may be bent at a plurality of preset positions to form a V-shape, U-shape, or the like at the bending positions. The bending shape of the single tube may be designed according to the actual situation.

In the above embodiments, by arranging the flat tube to be formed by bending a single tube, the quantity of weld points of the heat exchange body 312 may be reduced, thereby reducing the risk of leakage of the heat exchange body 312 and improving the reliability of the heat exchange body 312. At the same time, the operation process of bending a single tube is simpler than a manufacturing process of a plate structure, thereby significantly reducing the cost of the heat exchange body 312.

According to some embodiments of the present application, the flat tube may be bent in an arc shape at a bending position.

The arc-shaped bend can reduce a flow resistance of the fluid and reduce the pressure drop. Furthermore, the arc-shaped bend of the flat tube at the bending position can increase the flow rate of the heat exchange fluid in the heat exchange flow channel, thereby increasing the heat exchange efficiency of the heat exchange body 312.

In the above embodiments, by bending the flat tube in an arc shape at the bending position, the flow resistance of the fluid can be reduced and the pressure drop is reduced. Furthermore, the flow rate of the heat exchange fluid in the heat exchange flow channel can be increased, thereby increasing the heat exchange efficiency of the heat exchange body 312.

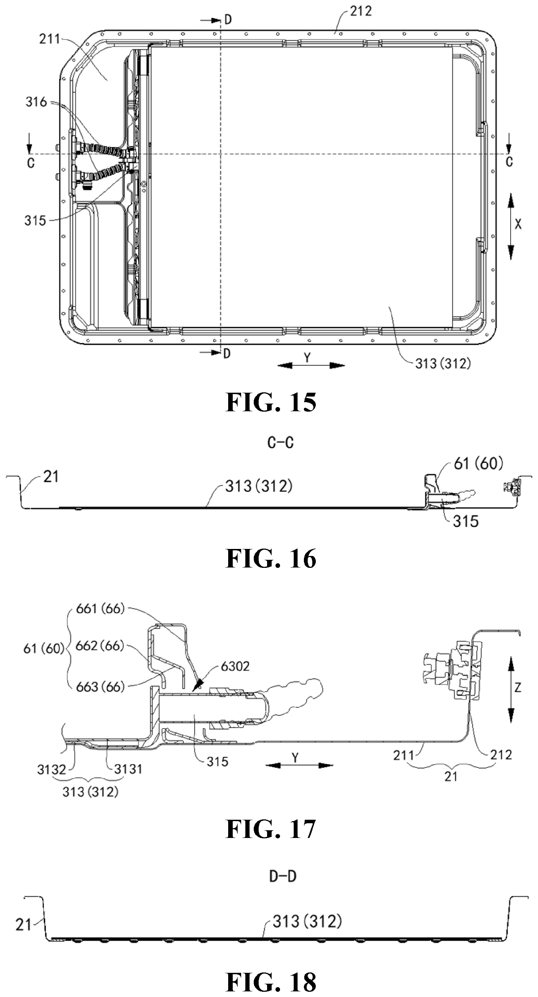

Referring to FIG. 13 to FIG. 15, FIG. 13 is a partially assembly diagram of a battery 100 according to other embodiments of the present application; FIG. 14 is a schematic structural diagram of a first heat exchange member 31 of the battery 100 shown in FIG. 13; and FIG. 15 is a top view of the battery 100 shown in FIG. 13. The heat exchange body 312 includes a heat exchange plate 313.

In the above technical solution, by configuring the heat exchange body 312 as the heat exchange plate 313, on the one hand, a connection area between the heat exchange body 312 and the bottom wall 211 of the box body 21 can be increased, thereby improving the reliability of the connection between the heat exchange body 312 and the bottom wall 211 of the box body 21. On the other hand, a contact area between the heat exchange body 312 and the battery cell assembly 101 can be increased, thereby improving the heat exchange efficiency of the heat exchange body 312 and enhancing the reliability of the battery 100.

In addition, the structure of the heat exchange plate 313 is more stable, with higher structural strength and less likely to be damaged, thereby extending the service life of the first heat exchange member 31.

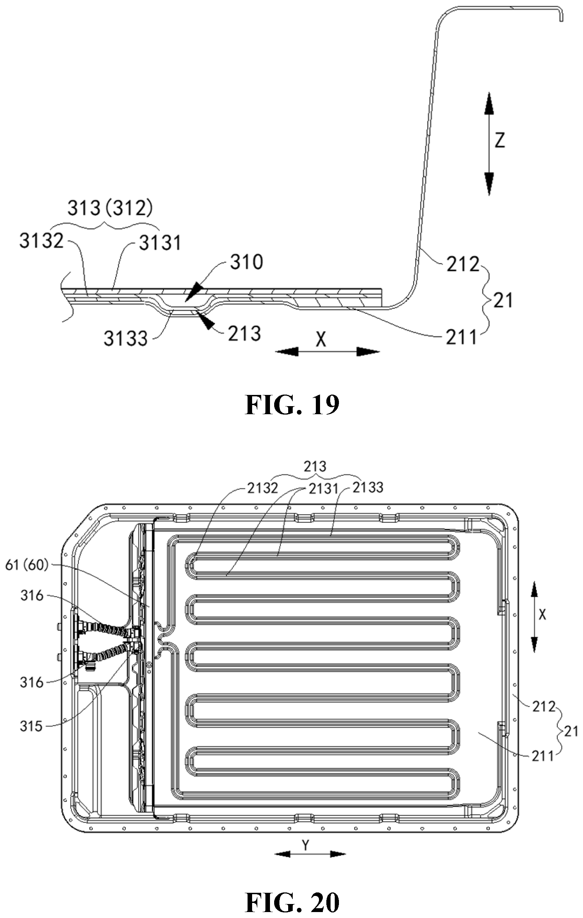

Further referring to FIG. 16 to FIG. 19, FIG. 16 is a sectional structural diagram along a line C-C in FIG. 15; FIG. 17 is a partial enlarged view of the structure shown in FIG. 16; FIG. 18 is a sectional structural diagram along a line D-D in FIG. 15; and FIG. 19 is a partial enlarged view of the structure shown in FIG. 18. The heat exchange plate 313 includes a first plate portion 3131 and a second plate portion 3132. The second plate portion 3132 covers one side of the first plate portion 3131 in a thickness direction, and a heat exchange flow channel 310 is defined between the second plate portion 3132 and the first plate portion 3131.

The first plate portion 3131 is fixedly connected to the battery cell assembly 101, and the second plate portion 3132 is fixedly connected to the bottom wall 211 of the box body assembly 20. The second plate portion 3132 has a protrusion 3133, and the protrusion 3133 is arranged in the accommodating groove 213.

In the above technical solution, the heat exchange flow channel 310 can be defined by at least two plate portions, which can improve the connection reliability between the heat exchange body 312 and the bottom wall 211 of the box body 21, as well as between the heat exchange body 312 and the battery cell assembly 101, while meeting the heat exchange requirements. Forming the protrusion 3133 on the second plate portion 3132 so that the protrusion 3133 fits the accommodating groove 213 can, on the one hand, use the accommodating groove 213 to position the second plate portion 3132, improve the mounting stability and reliability of the heat exchange body 312, thereby enhancing the reliability of the battery 100. On the other hand, it can increase a connection area between the heat exchange body 312 and the bottom wall 211 of the box body 21, thereby improving the reliability of fixing the heat exchange body 312 on the box body 21.

Referring to FIG. 16 and FIG. 17 again, the heat exchange plate 313 is bent upward at one end near the current collector 315, so that the current collector 315 can extend in the second direction and be connected to one side of the heat exchange plate 313 in the thickness direction. This configuration allows the current collector 315 to conveniently pass through either a first expansion beam 61 or a second expansion beam 62 described below.

Referring to FIG. 19 again, and further referring to FIG. 20, FIG. 20 is a schematic structural diagram of a box body 21 and the like of the battery 100 shown in FIG. 13. The accommodating groove 213 on the bottom wall 211 of the box body 21 includes a plurality of first groove segments 2131, a plurality of connecting groove segments 2132, and a second groove segment 2133. The plurality of first groove segments 2131 are arranged in the first direction, and each of the first groove segments 2131 extends in the second direction. The connecting groove segment 2132 is bent and connected between two adjacent first groove segments 2131. The second groove segment 2133 extends and bends around the circumference of the plurality of first groove segments 2131.

The second plate portion 3132 of the heat exchange plate 313 has protrusions 3133 formed at positions corresponding to the plurality of first heat exchange segments 3102, the plurality of first bent segments 3103, and the second heat exchange portion 3104. The protrusions 3133 corresponding to the plurality of first heat exchange segments 3102 can fit with the plurality of first groove segments 2131, the protrusions 3133 corresponding to the plurality of connecting groove segments 2132 can fit with the plurality of connecting groove segments 2132, and the protrusion 3133 corresponding to the second heat exchange portion 3104 can fit with the second groove segment 2133.

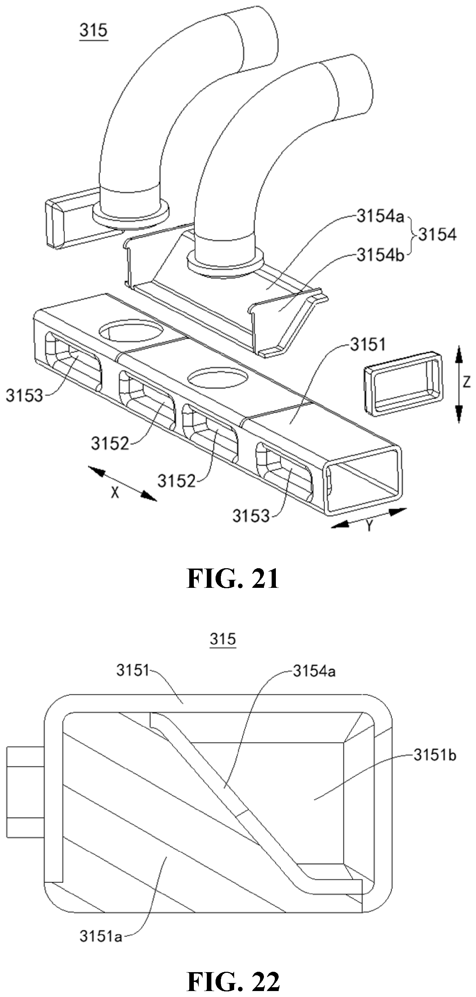

Referring to FIG. 7 again, and further referring to FIG. 21 and FIG. 22, FIG. 21 is a schematic structural diagram of a current collector 315 of a battery 100 according to still other embodiments of the present application; and FIG. 22 is a sectional structural diagram of the current collector 315 shown in FIG. 21. The current collector 315 includes a tube body 3151, a first flow channel interface 3152, and a second flow channel interface 3153. The first flow channel interface 3152 is connected to the first inlet/outlet 3109a of the heat exchange flow channel 310, and the second flow channel interface 3153 is connected to the second inlet/outlet 3109b of the heat exchange flow channel 310.

The current collector 315 further includes a partition structure 3154, and the partition structure 3154 is arranged inside the tube body 3151. The partition structure 3154 separates the first flow channel interface 3152 and the second flow channel interface 3153 inside the tube body 3151.

Specifically, the tube body 3151 may be configured for the collection and distribution of the heat exchange fluid. The first flow channel interface 3152 and the second flow channel interface 3153 are provided on the tube body 3151, and the first flow channel interface 3152 and the second flow channel interface 3153 are respectively connected to the inlet/outlet of the heat exchange flow channel, and are configured to input and output the heat exchange fluid into and out of the current collecting tube.

The partition structure 3154 is arranged inside the tube body 3151 and separates the first flow channel interface 3152 and the second flow channel interface 3153 inside the tube body 3151. That is, the first flow channel interface 3152 and the second flow channel interface 3153 are not in communication inside the tube body 3151. Thus, the first flow channel interface 3152 and the second flow channel interface 3153 may be the input end and the output end of the heat exchange flow channel, respectively. This allows the tube body 3151 and the heat exchange flow channel to form a complete channel, so that the heat exchange fluid may enter the heat exchange flow channel from the tube body 3151 for heat exchange and then exit from the tube body 3151 to complete the heat exchange work. Therefore, the liquid inflow and outflow operations can be completed using a single tube body 3151, thereby reducing the quantity of current collecting tubes used and thus reducing the production cost and space occupied by the thermal management assembly of the battery 100.

In the above technical solution, by arranging the tube body 3151, the first inlet/outlet 3109a and the second inlet/outlet 3109b of the heat exchange flow channel 310 are integrated. By arranging the partition structure 3154 inside the tube body 3151, the first flow channel interface 3152 and the second flow channel interface 3153 are separated, so that the interior of the tube body 3151 may be partitioned, and the liquid inflow and outflow processes do not affect each other.

Referring to FIG. 7 and FIG. 21, there are a plurality of heat exchange flow channels 310, a plurality of first flow channel interfaces 3152, and a plurality of second flow channel interfaces 3153. For example, the quantities of the first flow channel interfaces 3152 and the second flow channel interfaces 3153 may be two, three, or more. The plurality of first flow channel interfaces 3152 correspond one-to-one with and are connected to the first inlets/outlets 3109a of the plurality of heat exchange flow channels 310, and the plurality of second flow channel interfaces 3153 correspond one-to-one with and are connected to the second inlets/outlets 3109b of the plurality of heat exchange flow channels 310.

In the above technical solution, by arranging the plurality of first flow channel interfaces 3152 and the plurality of second flow channel interfaces 3153, the current collector 315 may be used to converge the plurality of first inlets/outlets 3109a of the plurality of heat exchange flow channels 310 together, and converge the plurality of second inlets/outlets 3109b of the plurality of heat exchange flow channels 310 together. On the one hand, the temperature of the heat exchange fluid in the plurality of heat exchange flow channels 310 can be more balanced, thereby improving the heat exchange efficiency of the first heat exchange member 31 and improving the reliability of the battery 100. On the other hand, it can facilitate the mounting of the first heat exchange member 31.

The plurality of first flow channel interfaces 3152 are in communication inside the tube body 3151; and/or the plurality of second flow channel interfaces 3153 are in communication inside the tube body 3151. The current collector 315 may be used to converge the plurality of first inlets/outlets 3109a of the plurality of heat exchange flow channels 310 together, and converge the plurality of second inlets/outlets 3109b of the plurality of heat exchange flow channels 310 together, so that the temperature of the heat exchange fluid in the plurality of heat exchange flow channels 310 can be more balanced.

Specifically, the plurality of second flow channel interfaces 3153 are in communication inside the tube body 3151, and in the extension direction of the tube body 3151, at least two second flow channel interfaces 3153 are located on both sides of the first flow channel interface 3152, that is, at least two second flow channel interfaces 3153 are arranged at both ends of the tube body 3151, and the plurality of first flow channel interfaces 3152 are arranged between the at least two second flow channel interfaces 3153.

In this way, the heat exchange fluid can flow out of the tube body 3151 from the second flow channel interfaces 3153 on both sides, and after heat exchange, it can flow back to the tube body 3151 from the first flow channel interfaces 3152 in the middle. Alternatively, the heat exchange fluid can flow out of the tube body 3151 from the first flow channel interfaces 3152 in a middle region of the tube body 3151, and after heat exchange, it can flow back to the tube body 3151 from the second flow channel interfaces 3153 at both ends of the tube body 3151. In this way, the heat exchange fluid can flow from the periphery of the battery 100 to the central region to achieve heat exchange, or the heat exchange fluid can flow from the central region of the battery 100 to the periphery to achieve heat exchange, thereby improving the temperature uniformity of the battery 100. This can reduce assembling steps and mounting space of the thermal management assembly, improve the temperature uniformity of the battery 100, and extend the service life of the battery 100.

In the above technical solution, by arranging the current collector 315 and using the partition structure 3154 to separate the plurality of first flow channel interfaces 3152 and the plurality of second flow channel interfaces 3153, with the plurality of second flow channel interfaces 3153 being in communication in the tube body 3151, the first flow channel interfaces 3152 and the second flow channel interfaces 3153 can respectively form the input ends and output ends of the heat exchange flow channel. This allows for the completion of liquid inflow and outflow operations using a single tube body 3151, reducing the quantity of current collecting tubes used and also reducing the need for external communication pipes. This reduces the production cost and space occupied by the heat exchange management assembly, and reduces the assembling steps and mounting space of the thermal management assembly. In addition, there are a plurality of second flow channel interfaces 3153, and at least two of the second flow channel interfaces 3153 are located on both sides of the first flow channel interface 3152. This allows the heat exchange fluid to flow from the periphery of the battery 100 to the central region to achieve heat exchange, or allows the heat exchange fluid to flow from the central region of the battery 100 to the periphery to achieve heat exchange. This can improve the temperature uniformity of the battery 100 and extend the service life of the battery 100.

Referring to FIG. 21 and FIG. 22, the tube body 3151 may be divided by a partition structure 3154 into a first space 3151a and a second space 3151b that are independent of each other. The first space 3151a is in communication with the first flow channel interface 3152, and the second space 3151b is in communication with the second flow channel interface 3153. In the extension direction of the tube body 3151, the second space 3151b includes a first segment, a second segment, and a third segment that are in communication in sequence. The first segment and the third segment are located on both sides of the first space 3151a, and the second segment is arranged side by side with the first space 3151a.

Specifically, the first space 3151a and the second space 3151b may be independent of each other and not in communication with each other, forming two independent flow channels. The second space 3151b includes a first segment, a second segment, and a third segment that are in communication in sequence. A second flow channel interface 3153 is arranged at positions of the first segment and the third segment. The second space 3151b allows a plurality of second flow channel interfaces 3153 to be in communication. The first space 3151a is arranged side by side with the second segment, and the first space 3151a is in communication with the first flow channel interface 3152. Thus, the first flow channel interface 3152 is located in a middle position of the plurality of second flow channel interfaces 3153.

For example, as shown in FIG. 21 and FIG. 22, there are two first flow channel interfaces 3152 and two second flow channel interfaces 3153. The two second flow channel interfaces 3153 are located on both sides of the two first flow channel interfaces 3152. In the length direction of the tube body 3151, the second space 3151b is C-shaped. The first space 3151a is arranged parallel to the second segment and is located between the first segment and the third segment.

In the above technical solution, by arranging the first space 3151a and the second space 3151b to be independent of each other and not in communication, two independent flow channels may be formed inside the tube body 3151, so that inflow and outflow of the heat exchange fluid do not interfere with each other. At the same time, the first space 3151a and the second space 3151b are arranged side by side, which can reduce the size of the tube body 3151, thereby reducing the space ratio of the current collecting tube.

Furthermore, as shown in FIG. 21 and FIG. 22, the partition structure 3154 may include a first partition plate 3154a and a second partition plate 3154b. The first partition plate 3154a is configured to separate the second segment and the first space 3151a. There are at least two second partition plates 3154b, which are located at both ends of the first partition plate 3154a in the extension direction of the tube body 3151. The second partition plate 3154b is configured to separate the first segment and the first space 3151a, as well as the third segment and the first space 3151a.

Specifically, the first partition plate 3154a may be formed into a plate of a certain size. The size of the first partition plate 3154a may be set according to the position size of the tube body 3151 and the first flow channel interface 3152. The first partition plate 3154a extends in the length direction of the tube body 3151 (for example, the X direction shown in FIG. 21). The two ends of the first partition plate 3154a in the width direction are sealed to an inner wall surface of the tube body 3151, and in the width direction of the tube body 3151 (for example, the Y direction shown in FIG. 21), it is used to separate the second segment and the first space 3151a, so that the second segment and the first space 3151a are arranged side by side in the width direction of the tube body 3151.

There are at least two second partition plates 3154b, that is, there may be two, three, or more second partition plates 3154b. When there are only two second partition plates 3154b, the second partition plates 3154b are located at both ends of the length direction of the first partition plate 3154a and are sealed to the first partition plate 3154a and the inner wall surface of the tube body 3151, so that the first space 3151a and the second space 3151b can be completely independent and not in communication with each other.

In this embodiment, by arranging the first partition plate 3154a and the second partition plate 3154b, two independent spaces can be formed inside the tube body 3151, so that the inflow and outflow of liquid do not interfere with each other, thereby improving the heat exchange effect of the battery 100.

Referring to FIG. 3 to FIG. 4, FIG. 6, and FIG. 8 again, there are a plurality of heat exchange flow channels 310 and two current collectors 315. One of the current collectors 315 has a plurality of liquid inflow interfaces 3155, and the plurality of liquid inflow interfaces 3155 correspond one-to-one with and are connected to the first inlets/outlets 3109a of the plurality of heat exchange flow channels 310. The other current collector 315 has a plurality of liquid outflow interfaces 3156, and the plurality of liquid outflow interfaces 3156 correspond one-to-one with and are connected to the second inlets/outlets 3109b of the plurality of heat exchange flow channels 310.

The heat exchange fluid entering from one of the current collectors 315 can flow into the corresponding heat exchange flow channels 310 from the first inlets/outlets 3109a of the plurality of heat exchange flow channels 310 respectively, and finally flow into the other current collector 315 from the second inlets/outlets 3109b of the plurality of heat exchange flow channels 310.

In the above technical solution, by arranging two current collectors 315, with one of the current collectors 315 configured for liquid inflow and the other one of the current collectors 315 configured for liquid outflow, the structure of the current collectors 315 can be simplified and the inflow and outflow of the heat exchange fluid can be conveniently controlled.

In some embodiments, the battery cell assembly 101 includes a plurality of battery units 102, each of the battery units 102 includes a plurality of battery cells 10, the plurality of battery cells 10 of each of the battery units 102 are arranged in the first direction, the plurality of battery units 102 are arranged in the second direction, and the first direction and the second direction are arranged to form an angle.

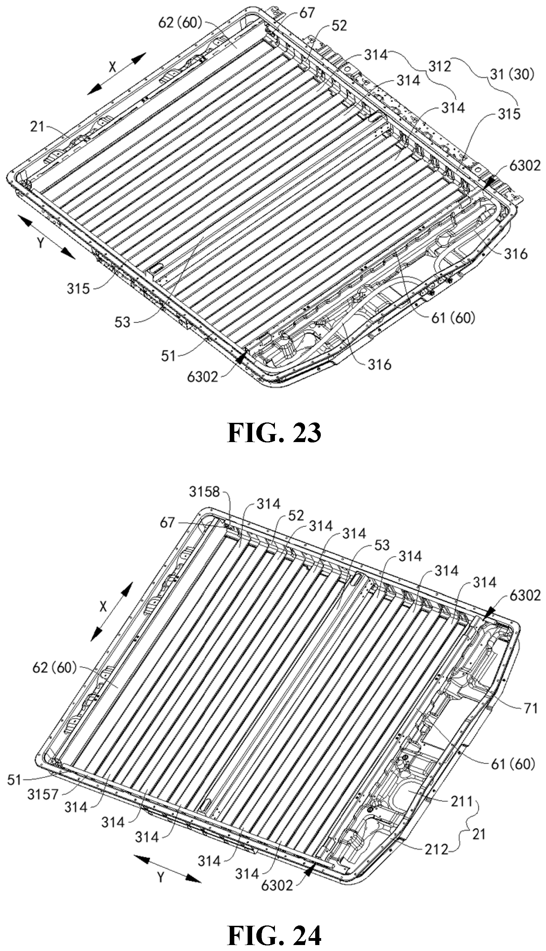

Referring to FIG. 23 and FIG. 24, FIG. 23 is a partially assembly diagram of a battery 100 according to other embodiments of the present application from one perspective; and FIG. 24 is a partially assembly diagram of a battery 100 according to still other embodiments of the present application from another perspective. The plurality of first heat exchange segments 3102 are arranged at intervals in the second direction, and each of the plurality of first heat exchange segments 3102 extends in the first direction. The plurality of first groove segments 2131 are arranged at intervals in the second direction, and each of the first groove segments 2131 extends in the first direction.

In other words, the arrangement direction of the first heat exchange segment 3102 is consistent with the arrangement direction of the plurality of battery units 102, and the arrangement direction of the first heat exchange segment 3102 is set to form an angle with the arrangement direction of the plurality of battery cells 10 in each of the battery units 102.

In the above technical solution, by defining the arrangement directions of the plurality of first heat exchange segments 3102 and the extension direction of each of the first heat exchange segments 3102, the plurality of battery cells 10 in each of the battery units 102 can be in contact with a same first heat exchange segment 3102, and the plurality of battery units 102 can be in contact with the plurality of first heat exchange segments 3102, thereby making the heat exchange of the plurality of battery cells 10 more uniform and improving the reliability of the battery 100.

Furthermore, by defining the arrangement directions of the plurality of first groove segments 2131 and the extension direction of each of the first groove segments 2131, the plurality of first groove segments 2131 can position the plurality of first heat exchange segments 3102, so that the arrangement of the heat exchange flow channel 310 is more stable, which can further improve the heat exchange efficiency, thereby improving the reliability of the battery 100.

Referring to FIG. 23 and FIG. 24 again, the heat exchange body 312 includes a plurality of heat exchange tubes 314, the plurality of heat exchange tubes 314 are arranged at intervals in the second direction, and each of the heat exchange tubes 314 defines a first heat exchange segment 3102. By configuring the heat exchange body 312 to include the plurality of heat exchange tubes 314, the amount of material used in the heat exchange body 312 can be reduced, thereby lowering costs.

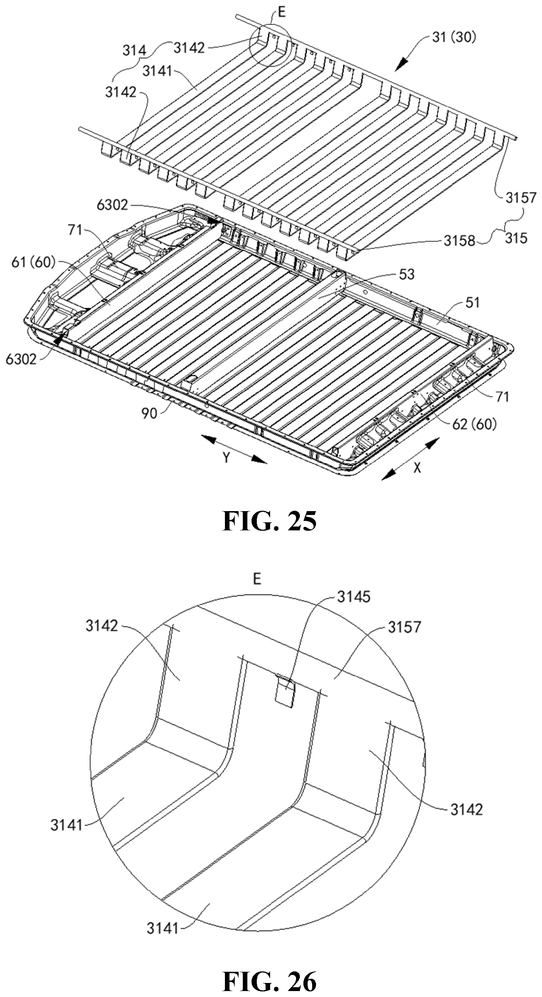

Referring to FIG. 25 and FIG. 26, FIG. 25 is an exploded structural diagram of the battery 100 shown in FIG. 24; and FIG. 26 is an enlarged view of a portion E shown in FIG. 25. Each heat exchange tube 314 includes a first tube segment 3141 and two second tube segments 3142. The first tube segment 3141 extends in the first direction, and the first tube segment 3141 defines the first heat exchange segment 3102. The two second tube segments 3142 both extend in a third direction, one end of each of the two first tube segments 3141 is respectively in communication with both ends of the first tube segment 3141, and the other end of each of the two first tube segments 3141 is in communication with the current collector 315.

The second tube segment 3142 is located between the bottom of the battery cell assembly 101 and the bottom wall 211 of the box body 21, and the second tube segment 3142 is located between the peripheral wall of the battery cell assembly 101 and the position of the box body 21.

In the above technical solution, by configuring the heat exchange tube 314 to the above structure, the structure of the heat exchange tube 314 can correspond to the bottom wall 211 and the enclosure 212 of the box body 21, and the structure of the heat exchange tube 314 can correspond to the bottom and the side of the battery cell assembly 101, thereby increasing the contact area between the heat exchange tube 314 and the battery cell assembly 101, improving the heat exchange efficiency of the first heat exchange member 31, and thus improving the reliability of the battery 100.

The heat exchange tube 314 is a flat tube. In the above technical solution, the heat exchange body 312 is configured to include the flat tube, and since the flat tube occupies less space, it is conducive to increasing the capacity of the battery 100 and reducing the weight, volume, and cost of the battery 100.

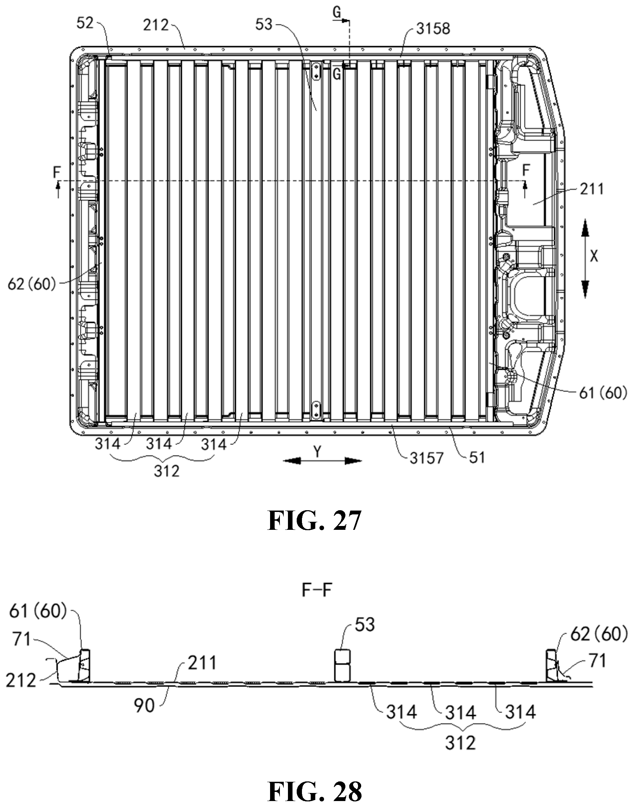

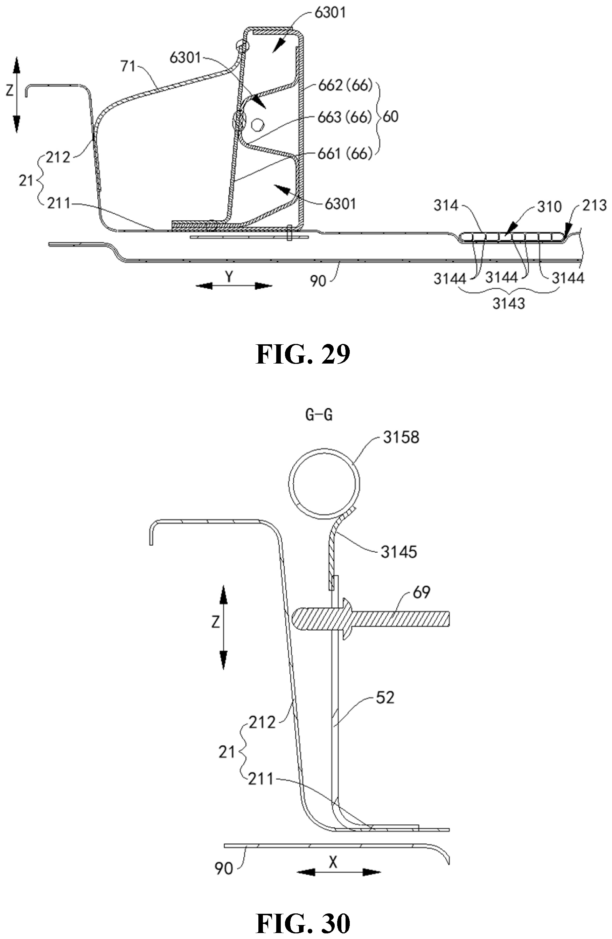

Referring to FIG. 27 to FIG. 29, FIG. 27 is a top view of the battery 100 shown in FIG. 24; FIG. 28 is a sectional structural diagram along a line F-F in FIG. 24; and FIG. 29 is a partial enlarged view of the structure shown in FIG. 28. The heat exchange tube 314 is provided with a reinforcing member 3143 therein.

In the above technical solution, by arranging the reinforcing member 3143 inside the heat exchange tube 314, deformation resistance of the heat exchange tube 314 can be improved, and the heat exchange tube 314 can be in full contact with the battery cell assembly 101, thereby improving the heat exchange efficiency and further enhancing the reliability of the battery 100.

Referring to FIG. 29 again, the reinforcing member 3143 includes a plurality of reinforcing ribs 3144, the plurality of reinforcing ribs 3144 are arranged at intervals in the second direction, and each of the reinforcing ribs 3144 is supported between two walls of the heat exchange tube 314 arranged opposite each other in its thickness direction.

The second direction here is a width direction of the heat exchange tube 314. The plurality of reinforcing ribs 3144 are arranged at intervals in the width direction of the heat exchange tube 314. One side of each of the reinforcing ribs 3144 abuts against one side of the heat exchange tube 314 in the thickness direction, and the other side of each of the reinforcing ribs 3144 abuts against the other side of the heat exchange tube 314 in the thickness direction. Thus, the plurality of reinforcing ribs 3144 are used to be supported between two walls of the heat exchange tube 314 that are arranged opposite to each other in the thickness direction.

The reinforcing ribs 3144 can be along the thickness direction of the heat exchange tube 314, that is, the reinforcing ribs 3144 can be perpendicular to the two walls of the heat exchange tube 314 that are arranged opposite each other in the thickness direction. Of course, the reinforcing ribs 3144 can also extend obliquely with respect to the thickness direction of the heat exchange tube 314.

In the above technical solution, by configuring the reinforcing member 3143 to include a plurality of reinforcing ribs 3144, the deformation resistance of the heat exchange member in the third direction perpendicular to the second direction can be improved. On one hand, it can enhance the structural strength of the heat exchange tube 314 and the reliability of the heat exchange member, thereby improving the reliability of the battery 100. On the other hand, it can ensure sufficient contact between the heat exchange tube 314 and the battery cell assembly 101, improve the heat exchange efficiency, and further enhance the reliability of the battery 100.

Referring to FIG. 24 to FIG. 26 again, and further referring to FIG. 30, FIG. 30 is a sectional structural diagram along a line G-G in FIG. 24. The heat exchange body 312 further includes a fixing member 3145, the fixing member 3145 is arranged between two adjacent heat exchange tubes 314, and the heat exchange body 312 is connected to the box body 21 through the fixing member 3145.

Specifically, there are a plurality of fixing members 3145. A fixing member 3145 is provided between two ends of any two adjacent heat exchange tubes 314. In an embodiment where each of the heat exchange tubes 314 includes a first tube segment 3141 and two second tube segments 3142, a fixing member 3145 is provided between one of the second tube segments 3142 of any two adjacent heat exchange tubes 314, and a fixing member 3145 is provided between the other of the second tube segments 3142 of any two adjacent heat exchange tubes 314. The plurality of fixing members 3145 are fixed inside the box body 21, which can fix the plurality of heat exchange tubes 314 inside the box body 21, thereby improving the mounting stability and reliability of the heat exchange body 312 in the first direction and the second direction.

In the above technical solution, by arranging the fixing member 3145, the heat exchange body 312 can be fixed inside the box body 21, thereby improving the mounting stability and reliability of the heat exchange body 312, and thus improving the reliability of the battery 100.

Referring to FIG. 27 and FIG. 30 again, the box body 21 is provided with a first fixed beam 51 and a second fixed beam 52, the first fixed beam 51 and the second fixed beam 52 are arranged at an interval in the first direction, length directions of the first fixed beam 51 and the second fixed beam 52 both extend in the second direction, and the battery cell assembly 101 is located between the first fixed beam 51 and the second fixed beam 52.

By arranging the first fixed beam 51 and the second fixed beam 52, the structure of the box body 21 can be reinforced, which helps improve the structural strength of the box body 21 and thus improve the reliability of the battery 100.

The fixing member 3145 is connected to the box body 21 via the first fixed beam 51 or the second fixed beam 52.

Specifically, in order not to damage the sealing performance of the box body 21, the first fixed beam 51 and the second fixed beam 52 can be welded to the inner side of the enclosure 212 of the box body 21. The fixing member 3145 located between one end of any two heat exchange tubes 314 can be connected to the first fixed beam 51 through a third fastener 69, and the fixing member 3145 located between the other end of any two heat exchange tubes 314 can be connected to the second fixed beam 52 through the third fastener 69.

In the above technical solution, by arranging the first fixed beam 51 and the second fixed beam 52, the structural strength of the box body 21 can be improved, thereby enhancing the reliability of the battery 100. On the other hand, the fixing member 3145 of the heat exchange body 312 can be fixed to the first fixed beam 51 or the second fixed beam 52, thereby fixing the heat exchange body 312 inside the box body 21. Without damaging the structure of the box body 21, the mounting stability and reliability of the first heat exchange member 31 inside the box body 21 can be improved, thereby further enhancing the reliability of the battery 100.

Referring to FIG. 21 to FIG. 23, the current collector 315 includes a first current collecting tube 3157 and a second current collecting tube 3158, the first current collecting tube 3157 and the second current collecting tube 3158 are arranged at an interval in the first direction, length directions of the first current collecting tube 3157 and the second current collecting tube 3158 both extend in the second direction, and both ends of each of the heat exchange tube 314 are in communication with the first current collecting tube 3157 and the second current collecting tube 3158 respectively.

When the first current collecting tube 3157 is a liquid inflow tube and the second current collecting tube 3158 is a liquid outflow tube, the heat exchange fluid can flow into the plurality of heat exchange tubes 314 through the first current collecting tube 3157 and then flow out through the second current collecting tube 3158.

When the first current collecting tube 3157 is the flow outflow tube and the second current collecting tube 3158 is the flow inflow tube, the heat exchange fluid can flow into the plurality of heat exchange tubes 314 through the second current collecting tube 3158 and then flow out through the first current collecting tube 3157.

The plurality of heat exchange tubes 314 are connected in parallel, so that the temperature of the plurality of heat exchange tubes 314 is relatively uniform, which reduces a temperature difference between different parts of the battery cell assembly 101, which is conducive to improving the heat exchange effect and thus improving the reliability of the battery 100.

In the above technical solution, by configuring the current collector 315 to include the first current collecting tube 3157 and the second current collecting tube 3158, and having both ends of each of the plurality of heat exchange tubes 314 in communication with the first current collecting tube 3157 and the second current collecting tube 3158, the plurality of heat exchange tubes 314 are arranged in parallel, so that the plurality of heat exchange tubes 314 have relatively uniform temperature, which is conducive to improving the heat exchange effect and thus improving the reliability of the battery 100.

In addition, the first current collector 315 and the second current collector 315 can be arranged at the top, so that they can be arranged opposite the enclosure 212 of the box body 21. Therefore, there is no need to provide an opening at a lower position of the expansion beam 60, which eliminates the need for a sealing structure between the current collector 315, the expansion beam 60, and the bottom wall 211 of the box body 21.

In some embodiments, the battery cell assembly 101 includes a plurality of battery units 102, each of the battery units 102 includes a plurality of battery cells 10, the plurality of battery cells 10 of each of the battery units 102 are arranged in the first direction, the plurality of battery units 102 are arranged in the second direction, and the first direction and the second direction are arranged to form an angle.

For the battery cell assembly 101, an X direction in FIG. 7 is a width direction of the battery cell assembly 101, and a Y direction is a length direction of the battery cell assembly 101. For the battery cell 10, the X direction in FIG. 7 is the length direction of the battery cell 10, and the Y direction is the thickness direction of the battery cell 10. The battery cell assembly 101 includes a plurality of battery units 102, and the plurality of battery units 102 are arranged along a second direction. That is, the plurality of battery units 102 are stacked in the thickness direction of the battery cell 10. Each of the battery units 102 includes a plurality of battery cells 10, and the plurality of battery cells 10 of each of the battery units 102 are arranged in the first direction. That is, the plurality of battery cells 10 of each of the battery units 102 are stacked in the length direction of the battery cell 10.

Referring to FIG. 9 again, the box body 21 is provided with an expansion beam 60. The expansion beam 60 includes a first expansion beam 61 and a second expansion beam 62. The first expansion beam 61 and the second expansion beam 62 are arranged at an interval in the second direction, and length directions of the first expansion beam 61 and the second expansion beam 62 both extend in the first direction. Each of the first expansion beam 61 and the second expansion beam 62 has a cavity 6301. The battery cell assembly 101 is located between the first expansion beam 61 and the second expansion beam 62.

In the above technical solution, by arranging the first expansion beam 61 and the second expansion beam 62, when the battery cell 10 of the battery cell assembly 101 has an expansion tendency, the first expansion beam 61 and the second expansion beam 62 abut against the battery cell assembly 101, and use deformation of the cavities 6301 of the first expansion beam 61 and the second expansion beam 62 to absorb and transmit an expansion force, thereby reducing the probability of the battery cell 10 deforming due to the expansion force.

Referring to FIG. 9 and FIG. 11 again, the box body 21 is provided with a first fixed beam 51 and a second fixed beam 52, the first fixed beam 51 and the second fixed beam 52 are arranged at an interval in the first direction, length directions of the first fixed beam 51 and the second fixed beam 52 both extend in the second direction, and the battery cell assembly 101 is located between the first fixed beam 51 and the second fixed beam 52. By arranging the first fixed beam 51 and the second fixed beam 52, the structure of the box body 21 can be reinforced, which helps improve the structural strength of the box body 21 and thus improve the reliability of the battery 100.

Two ends of each of the first expansion beam 61 and the second expansion beam 62 are connected to the first fixed beam 51 and the second fixed beam 52 respectively through a first fastener 67.

Specifically, the first expansion beam 61 and the second expansion beam 62 are arranged opposite to each other in the second direction, and the length directions of the first expansion beam 61 and the second expansion beam 62 both extend in the first direction. The first fixed beam 51 and the second fixed beam 52 are arranged opposite to each other in the first direction, and the length directions of the first fixed beam 51 and the second fixed beam 52 both extend in the second direction. The two ends of the first expansion beam 61 in the length direction are respectively connected to the first fixed beam 51 and the second fixed beam 52, so that the first expansion beam 61 is fixed in the box body 21 by the first fixed beam 51 and the second fixed beam 52. The two ends of the second expansion beam 62 in the length direction are respectively connected to the first fixed beam 51 and the second fixed beam 52, so that the second expansion beam 62 is fixed in the box body 21 by the first fixed beam 51 and the second fixed beam 52. The first expansion beam 61 and the second expansion beam 62, as well as the first fixed beam 51 and the second fixed beam 52 are combined to form a square frame, which can define the mounting space for accommodating the battery cell assembly 101.

More specifically, the first fixed beam 51 and the second fixed beam 52 are respectively welded to two oppositely arranged side walls of the enclosure 212 of the box body 21. For example, the first expansion beam 61 and the second expansion beam 62 are respectively provided with two connecting pieces arranged opposite each other in the second direction. The connecting pieces can form an L-shaped structure. One end of each of the connecting pieces can be welded to the corresponding fixed beam and the other end can be connected to the corresponding expansion beam 60 through the first fastener 67 (e.g., a riveting member).

In the above technical solution, by arranging the first fixed beam 51 and the second fixed beam 52, the structural strength of the box body 21 can be improved, thereby enhancing the reliability of the battery 100. On the other hand, each of the first expansion beam 61 and the second expansion beam 62 can be fixed between the first fixed beam 51 and the second fixed beam 52, thereby fixing the first expansion beam 61 and the second expansion beam 62 inside the box body 21. Without damaging the structure of the box body 21, the mounting stability and reliability of the first expansion beam 61 and the second expansion beam 62 inside the box body 21 can be improved, thereby further enhancing the reliability of the battery 100.

Referring to FIG. 4 and FIG. 5 again, at least one of the first expansion beam 61 and the second expansion beam 62 has a clearance hole 6302, and the clearance hole 6302 is used for avoiding the current collector 315 and/or the heat exchange body 312.

In the above technical solution, by providing the clearance hole 6302 on the first expansion beam 61 and/or the second expansion beam 62, interference caused by the first expansion beam 61 and/or the second expansion beam 62 to the mounting of the first heat exchange member 31 can be reduced without affecting functions of the first expansion beam 61 and/or the second expansion beam 62 in absorbing and transmitting the expansion force. It also facilitates connection between the current collector 315 of the first heat exchange member 31 and a water nozzle on the box body 21.

Referring to FIG. 4, FIG. 5, FIG. 9, and FIG. 10 again, at least one of the first expansion beam 61 and the second expansion beam 62 includes a support beam 64 and an expansion beam body 65. The support beam 64 extends in the first direction, and the support beam 64 is fixedly connected to the bottom wall 211 of the box body 21, and the support beam 64 defines a clearance hole 6302. The expansion beam body 65 extends in the first direction, the expansion beam body 65 is connected to the support beam 64, and the expansion beam body 65 defines a cavity 6301.

The support beam 64 can be welded to the box body 21, the expansion beam body 65 and the support beam 64 can be connected by a second fastener 68, and two ends of the expansion beam body 65 in the length direction can be connected to the first fixed beam 51 and the second fixed beam 52.

In the above technical solution, by configuring the first expansion beam 61 and/or the second expansion beam 62 to include the support beam 64 and the expansion beam body 65, the support beam 64 can provide a mounting position for the expansion beam 60 without damaging the structure of the box body 21, which is conducive to improving the sealing performance of the bottom of the box body 21. When the battery cell 10 of the battery cell assembly 101 has an expansion tendency, the expansion beam body 65 abuts against the battery cell assembly 101, and deformation of the cavity 6301 of the expansion beam body 65 is utilized to absorb and transmit an expansion force, thereby reducing the probability of the battery cell 10 deforming due to the expansion force.

Referring to FIG. 4 and FIG. 5 again, the support beam 64 includes a plurality of support portions 641. There are at least two support portions 641. The plurality of support portions 641 are arranged at intervals in the first direction. A clearance hole 6302 is defined between two adjacent support portions 641. That is, the support beam 64 is a multi-segment structure.

It should be noted that the quantity of support portions 641 can be selected as needed. For example, if there is one current collector 315 in the first heat exchange member 31, there may be two support portions 641. Alternatively, if there are two current collectors 315 in the first heat exchange member 31, there may be two support portions 641.

Specifically, in the assembling process, the support beam 64 can be fixed inside the box body 21 first, and then the box body 21 with the support beam 64 can be treated with electrophoresis or other methods. After that, the first heat exchange member 31 can be mounted into the box body 21 from top to bottom, so that the support beam 64 can avoid the first heat exchange member 31. Then, the expansion beam body 65 is mounted on the support beam 64, so that the expansion beam body 65 stops above the first heat exchange member 31. Finally, the battery cell assembly 101 is mounted between the first expansion beam 61 and the second expansion beam 62.

In the above technical solution, the support beam 64 is configured to have the above structure. The clearance hole 6302 can be defined by two adjacent support portions 641. On the one hand, it is not necessary to provide an opening on the support beam 64, which simplifies the processing steps and is conducive to improving production efficiency and reducing costs. On the other hand, during assembling, the first heat exchange member 31 can be placed in the box body 21 from top to bottom first, and then the expansion beam body 65 can be mounted. This can reduce the difficulty of mounting the first heat exchange member 31, thereby further improving production efficiency and reducing costs.

Referring to FIG. 9 and FIG. 10 again, the expansion beam body 65 includes a main body part 651 and a connecting portion 652. At least a portion of the main body part 651 is arranged on a side of the plurality of support portions 641 facing the battery cell assembly 101. The connecting portion 652 is connected to a side of the main body part 651 facing away from the battery cell assembly 101, and the connecting portion 652 is connected to a side of the plurality of support portions 641 facing away from the bottom wall 211 of the box body 21. The main body part 651 and the connecting portion 652 respectively cover at least a portion of the clearance hole 6302.

In the above technical solution, by configuring the expansion beam body 65 to include the main body part 651 and the connecting portion 652, when the battery cell 10 of the battery cell assembly 101 has an expansion tendency, the main body part 651 abuts against the battery cell assembly 101, and deformation of the cavity 6301 of the main body part 651 is utilized to absorb and transmit an expansion force, thereby reducing the probability of the battery cell 10 deforming due to the expansion force. Arranging the connecting portion 652 allows the main body part 651 to be connected to the support beam 64, thereby achieving mounting of the expansion beam body 65.

In addition, by covering at least a portion of the clearance hole 6302 with the main body part 651 and the connecting portion 652, on the one hand, the impact of providing the clearance hole 6302 on the structural strength of the first expansion beam 61 or the second expansion beam 62 can be reduced. On the other hand, a contact area between the first expansion beam 61 or the second expansion beam 62 and the battery cell assembly 101 can be increased, thereby improving the absorption and transmission of the expansion force by the first expansion beam 61 or the second expansion beam 62, and thus improving the reliability of the battery 100.

Optionally, the support beam 64 is welded to the bottom wall 211 of the box body 21, and the expansion beam body 65 is connected to a side of the support beam 64 facing away from the bottom wall 211 of the box body 21 by the second fastener 68.

Specifically, a middle part of the support beam 64 in the width direction is arched upwards, and two sides of the support beam 64 in the width direction are respectively welded to the bottom wall 211 of the box body 21, thereby defining a cavity between the support beam 64 and the bottom wall 211 of the box body 21. The expansion beam body 65 can be connected to the middle part of the support beam 64 in the width direction by the second fastener 68. The cavity formed between the support beam 64 and the bottom wall 211 of the box body 21 can accommodate the second fastener 68.

In the above technical solution, by connecting the expansion beam body 65 and the support beam 64 with the second fastener 68, assembling and disassembling operations of the expansion beam body 65 and the support beam 64 are made simpler, which is conducive to improving the production efficiency of the battery 100 and facilitating the maintenance and replacement of components.

Referring to FIG. 10 again, the expansion beam body 65 is manufactured using an extrusion process to define a cavity 6301. The expansion beam body 65 is manufactured using the extrusion process, which allows for the extrusion of complex cross-sections according to design requirements. This reduces the quantity of components in the expansion beam body 65, eliminates the need for assembling steps of a plurality of components of the expansion beam body 65, and makes the mounting of the expansion beam body 65 more convenient, thereby improving the production efficiency.

Referring to FIG. 28 and FIG. 29 again, at least one of the first expansion beam 61 and the second expansion beam 62 includes a plurality of plates 66, the plurality of plates 66 being stacked and connected in the second direction, the plates 66 extending in the first direction, a cavity 6301 being defined between at least two plates 66, and a clearance hole 6302 penetrating through the plurality of plates 66.

In other words, the plurality of plates 66 can be formed individually, and after the plurality of plates 66 are formed, they can be connected together by a mechanical connection, so as to assemble the first expansion beam 61 or the second expansion beam 62.

During the forming process, the plurality of plates 66 can be pre-machined with clearance holes 6302. During the assembling process, the clearance holes 6302 of the plurality of plates 66 are aligned to form the first expansion beam 61 or the second expansion beam 62 with the clearance hole 6302. Alternatively, the plurality of plates 66 may be connected together first before machining the clearance hole 6302.

In the above technical solution, by using the plurality of separately formed plates 66 to form the first expansion beam 61 or the second expansion beam 62, the processing difficulty of each component can be reduced, thereby reducing production costs and improving the production efficiency.

Referring to FIG. 29 again, the plates 66 are manufactured using a stamping process. The plurality of plates 66 manufacturing using the stamping process can be stamped into different structures as needed. The forming process is simple, reducing processing difficulty and production costs. By assembling the plurality of plates 66, the cavity 6301 can be defined, and deformation of the cavity 6301 can be used to absorb and transfer an expansion force, thereby reducing the probability of battery cell 10 deforming due to the expansion force.

Specifically, as shown in FIG. 29, the plurality of plates 66 include an outer support plate 661, an inner support plate 662, and a reinforcing plate 663. The outer support plate 661 and the inner support plate 662 are arranged opposite to each other in the second direction. A lower end of the outer support plate 661 and a lower end of the inner support plate 662 are both connected to the bottom wall 211 of the box body 21. An upper end of the outer support plate 661 is connected to an upper end of the inner support plate 662. The reinforcing plate 663 is arranged between the outer support plate 661 and the inner support plate 662. The reinforcing plate 663 can form a multi-bend plate 66. The reinforcing plate 663 is connected to the outer support plate 661 and the inner support plate 662, thereby defining a plurality of cavities 6301.

More specifically, the lower end of the outer support plate 661 and the lower end of the inner support plate 662 are both welded to the bottom wall 211 of the box body 21. The upper end of the outer support plate 661 is welded to the upper end of the inner support plate 662. The reinforcing plate 663 is arranged between the outer support plate 661 and the inner support plate 662, and the reinforcing plate 663 can be welded to the outer support plate 661 and the inner support plate 662.

Referring to FIG. 4, FIG. 5, and FIG. 13 again, in the second direction, the current collector 315 is connected to one side of the heat exchange body 312, and the clearance hole 6302 is provided on a side of the first expansion beam 61 or the second expansion beam 62 facing the bottom wall 211 of the box body 21.

In the above technical solution, the clearance hole 6302 is provided on the side of the first expansion beam 61 or the second expansion beam 62 facing the bottom wall 211 of the box body 21, so that the current collector 315 or the heat exchange body 312 does not need to be bent upward or bend too much upward, which can simplify the structure of the current collector 315 or heat exchange body 312. In addition, with this arrangement, the first expansion beam 61 or the second expansion beam 62 can be stopped above the current collector 315 or the heat exchange body 312, thereby further limiting the first heat exchange member 31 and improving the mounting reliability of the first heat exchange member 31.

Referring to FIG. 23 to FIG. 25 again, the current collector 315 includes a first current collecting tube 3157 and a second current collecting tube 3158, the first current collecting tube 3157 and the second current collecting tube 3158 are arranged at an interval in the first direction, the length directions of the first current collecting tube 3157 and the second current collecting tube 3158 both extend in the second direction. The clearance hole 6302 is provided on a side of the first expansion beam 61 or the second expansion beam 62 facing away from the bottom wall 211 of the box body 21. For example, the clearance hole 6302 may be provided at tops of two ends of the first expansion beam 61 or the second expansion beam 62.

In the above technical solution, by arranging the clearance hole 6302 on the side of the first expansion beam 61 or the second expansion beam 62 facing away from the bottom wall 211 of the box body 21, the first current collector 315 and the second current collector 315 can be arranged at the top, so that they can be arranged opposite the enclosure 212 of the box body 21, which eliminates the need for a sealing structure between the current collector 315, the expansion beam 60, and the bottom wall 211 of the box body 21.

Referring to FIG. 28 and FIG. 29, at least one of the first expansion beam 61 and the second expansion beam 62 is connected to a support member 71 on a side facing away from the battery cell assembly 101, and the support member 71 is connected to the bottom wall 211 of the box body 21 or the enclosure 212 of the box body 21.

As an example, the first expansion beam 61 is provided with the support member 71 on a side facing away from the battery cell assembly 101. A part of the support member 71 opposite the first expansion beam 61 and a part of the bottom wall 211 or the enclosure 212 of the box body 21 opposite the first expansion beam 61 may be welded.

As an example, the second expansion beam 62 is provided with the support member 71 on a side facing away from the battery cell assembly 101. A part of the support member 71 opposite the second expansion beam 62 and a part of the bottom wall 211 or the enclosure 212 of the box body 21 opposite the second expansion beam 62 may be welded.

As an example, each one of the first expansion beam 61 and the second expansion beam 62 is provided with support member 71 on a side facing away from the battery cell assembly 101. A part of the support member 71 opposite the corresponding expansion beam 60 and a part of the bottom wall 211 or the enclosure 212 of the box body 21 opposite the expansion beam 60 may be welded.

Of course, the support member 71 can be connected to the box body 21 and the expansion beam 60 in other ways, and the specific method can be selected according to the actual situation.

In the above technical solution, the support member 71 can be used to support the first expansion beam 61 or the second expansion beam 62, which can effectively improve the overall structural strength and rigidity of the first expansion beam 61 or the second expansion beam 62, reduce the probability of the first expansion beam 61 or the second expansion beam 62 tilting, and thus improve the reliability of the battery 100.

Referring to FIG. 9 to FIG. 12 again, the first expansion beam 61 is provided with a first mounting member 72, the second expansion beam 62 is provided with a second mounting member 73. The battery 100 further includes a pull rope 75, and two ends of the pull rope 75 are respectively connected to the first mounting member 72 and the second mounting member 73.

In the above technical solution, the plurality of pull ropes 75 can better resist a pressing force exerted by the battery cell assembly 101 on the first expansion beam 61 and the second expansion beam 62, which reduces the probability of the first expansion beam 61 or the second expansion beam 62 tilting with respect to a vertical direction, thereby improving the reliability of the battery 100.

Each of the first mounting member 72 and the second mounting member 73 includes a mounting portion 741 and a fixing portion 742. The mounting portion 741 of the first mounting member 72 can be fixed to the first expansion beam 61, and the fixing portion 742 of the first mounting member 72 is connected to the mounting portion 741 of the first mounting member 72, so that one end of the pull rope 75 can be fixed to the mounting portion 741 of the first mounting member 72. The mounting portion 741 of the second mounting member 73 can be fixed to the second expansion beam 62, and the fixing portion 742 of the second mounting member 73 is connected to the mounting portion 741 of the second mounting member 73, so that the other end of the pull rope 75 can be fixed to the mounting portion 741 of the second mounting member 73.

Specifically, the mounting portion 741 has an internal thread structure, the fixing portion 742 has an external bolt structure, the pull rope 75 is sleeved on the fixing portion 742, and the mounting portion 741 and the fixing portion 742 are connected through the internal thread structure and the external thread structure, so that the pull rope 75 can be fixed on the mounting portion 741, making the operation simpler.

In the above technical solution, by configuring each of the first mounting member 72 and the second mounting member 73 to the above structure, it is convenient to disassemble and assemble the pull rope 75.

Referring to FIG. 9, there are a plurality of first mounting members 72, a plurality of second mounting members 73, and a plurality of pull ropes 75. The plurality of first mounting members 72 and the plurality of second mounting members 73 are respectively arranged in the first direction, and two ends of the plurality of pull ropes 75 are respectively connected to the plurality of first mounting members 72 and the plurality of second mounting members 73 in a one-to-one correspondence. Therefore, the plurality of pull ropes 75 are arranged in the first direction, and each of the pull ropes 75 extends in the second direction even though the plurality of pull ropes 75 are arranged in the length directions of the first expansion beam 61 and the second expansion beam 62.

In the above technical solution, connecting the first expansion beam 61 and the second expansion beam 62 with the plurality of pull ropes 75 can better resist a pressing force exerted by the battery cell assembly 101 on the first expansion beam 61 and the second expansion beam 62, which further reduces the probability of the first expansion beam 61 or the second expansion beam 62 tilting with respect to the vertical direction and the first direction, and thus improves the reliability of the battery 100.

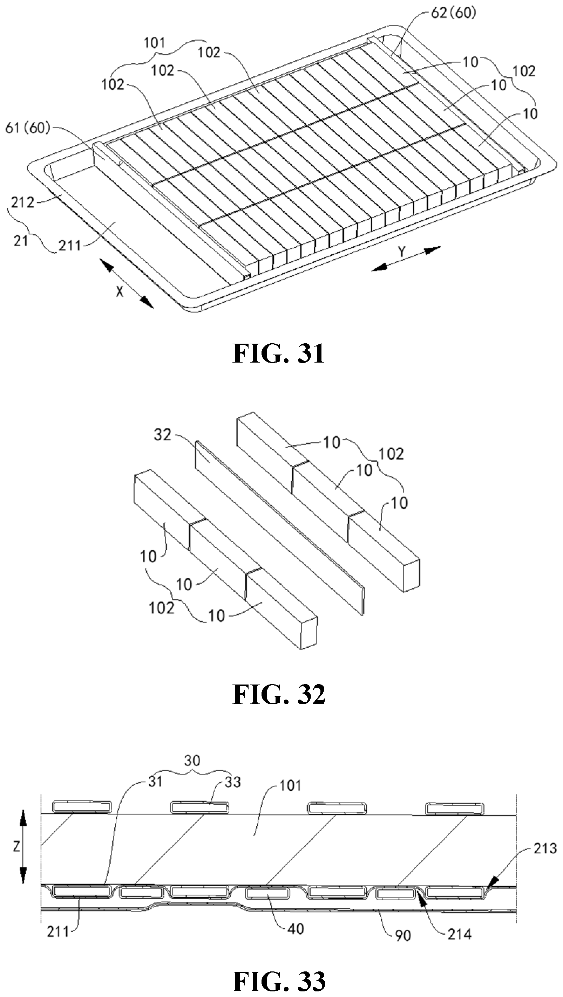

Referring to FIG. 31 and FIG. 32, FIG. 31 is a partially assembly diagram of a battery 100 according to yet other embodiments of the present application; and FIG. 32 is a structural sectional diagram of a battery cell 10 and a second heat exchange member 32 shown in FIG. 31. The battery cell assembly 101 includes a plurality of battery units 102, each battery unit 102 includes a plurality of battery cells 10, the plurality of battery cells 10 of each battery unit 102 are arranged in the first direction, the plurality of battery units 102 are arranged in the second direction, and the first direction and the second direction are arranged to form an angle.

As shown in FIG. 31, for the battery cell assembly 101, an X direction in FIG. 31 is a width direction of the battery cell assembly 101, and a Y direction is a length direction of the battery cell assembly 101. For the battery cell 10, the X direction in FIG. 31 is the length direction of the battery cell 10, and the Y direction is the thickness direction of the battery cell 10. The battery cell assembly 101 includes a plurality of battery units 102, and the plurality of battery units 102 are arranged along a second direction. That is, the plurality of battery units 102 are stacked in the thickness direction of the battery cell 10. Each of the battery units 102 includes a plurality of battery cells 10, and the plurality of battery cells 10 of each of the battery units 102 are arranged in the first direction. That is, the plurality of battery cells 10 of each of the battery units 102 are stacked in the length direction of the battery cell 10.

As shown in FIG. 32, the first heat exchange assembly 30 further includes a second heat exchange member 32, the second heat exchange member 32 being arranged between two adjacent battery units 102. In other words, the second heat exchange member 32 may be arranged in a position where large surfaces of two adjacent battery cells 10 are opposite each other, so that the large surfaces of the two adjacent battery cells 10 can both be in contact with the second heat exchange member 32, thereby improving the heat exchange efficiency of the battery cells 10 and further improving the reliability of the battery 100.

Therefore, in the above technical solution, by arranging the second heat exchange member 32, a contact area between the battery cell 10 and the heat exchange assembly can be increased, thereby increasing the contact area between the battery cell assembly 101 and the first heat exchange assembly 30, which can significantly improve the heat exchange efficiency and improve the reliability of the battery 100.

Referring to FIG. 2 again and further referring to FIG. 33, FIG. 33 is a partially assembly diagram of a battery 100 according to yet other embodiments of the present application. The box body assembly 20 further includes a box cover 22, the box cover 22 is connected above the box body 21, and the box cover 22 has a top wall.

The first heat exchange assembly 30 further includes a third heat exchange member 33, the third heat exchange member 33 being located at least partially between the top wall of the box cover 22 and the battery cell assembly 101.

In the above technical solution, by arranging the third heat exchange member 33, a contact area between the battery cell assembly 101 and the first heat exchange assembly 30 can be increased, which can significantly improve the heat exchange efficiency and improve the reliability of the battery 100.

Referring to FIG. 33 again, the battery 100 further includes a second heat exchange assembly 40, and the second heat exchange assembly 40 is attached externally to the box body 21.

In the above technical solution, by arranging the second heat exchange assembly 40 externally to the box body 21, there is no need to consider problems such as insulation and corrosion prevention of the heat exchange member and the battery cells 10 inside the box body 21. This simplifies the insulation and corrosion prevention design of the second heat exchange assembly 40, reduces the processing difficulty and production cost, solves a short circuit problem between the battery cells 10 and the second heat exchange assembly 40, and improves the reliability of the battery 100.

Moreover, by arranging the second heat exchange assembly 40 externally to the box body assembly 20, the second heat exchange assembly 40 does not occupy the space inside the box body 21, so that the capacity of the battery 100 is not reduced due to the mounting of the heat exchange member, thus well ensuring the capacity of the battery 100.

In the embodiment where the accommodating groove 213 is provided on the inner surface of the bottom wall 211 of the box body 21, the accommodating groove 213 may be integrally formed during the stamping process of the box body 21, or the accommodating groove 213 may be separately processed after the box body 21 is formed by stamping. During the processing of the accommodating groove 213, a mounting groove 214 may be integrally formed on the outer surface of the bottom wall 211 of the box body 21, and the second heat exchange assembly 40 may be placed in the mounting groove 214.

Providing the mounting groove 214 can, on the one hand, position the second heat exchange assembly 40, reduce the risk of shaking of the second heat exchange assembly 40, and improve mounting stability and reliability of the second heat exchange assembly 40, thereby improving the reliability of the battery 100. On the other hand, it can increase a connection area between the second heat exchange assembly 40 and the bottom wall 211 of the box body 21, thereby improving the reliability of the second heat exchange assembly 40 being fixed on the box body 21.

In addition, the battery cell assembly 101 can be in contact with the bottom wall 211 of the box body 21, which increases the connection area between the second heat exchange assembly 40 and the bottom wall 211 of the box body 21, and the heat exchange efficiency can further be improved, thereby further enhancing the reliability of the battery 100.

Referring to FIG. 6 again, according to some embodiments of the present application, the battery 100 includes a box body assembly 20, a battery cell assembly 101, a first heat exchange assembly 30, a first expansion beam 61, a second expansion beam 62, a connecting beam 53, a first fixed beam 51, a second fixed beam 52, a first mounting beam 81, a second mounting beam 82, and a bottom guard plate 90.

The box body assembly 20 includes a box body 21 and a box cover 22. The box body 21 is an integrally stamped member with a bottom wall 211 and an enclosure 212.

The first fixed beam 51 and the second fixed beam 52 are arranged opposite each other in the first direction. Length directions of the first fixed beam 51 and the second fixed beam 52 both extend in the second direction and are arranged opposite to two opposite side walls of the enclosure 212 of the box body 21. The first expansion beam 61 and the second expansion beam 62 are arranged opposite each other in the second direction. Length directions of the first expansion beam 61 and the second expansion beam 62 both extend in the first direction. Two ends of the first expansion beam 61 in the length direction are respectively connected to one end of the first fixed beam 51 and one end of the second fixed beam 52. Two ends of the second expansion beam 62 in the length direction are respectively connected to the other end of the first fixed beam 51 and the other end of the second fixed beam 52. At least one of the first expansion beam 61 and the second expansion beam 62 has a support member 71 connected to a side facing away from the battery cell assembly 101. The support member 71 is connected to the bottom wall 211 of the box body 21 or the enclosure 212 of the box body 21. A length direction of the connecting beam 53 extends in the first direction. Two ends of the connecting beam 53 in the length direction are respectively connected to a middle portion of the first fixed beam 51 and a middle portion of the second fixed beam 52.

In this embodiment, the first expansion beam 61 includes a support beam 64 and an expansion beam body 65. The support beam 64 includes a plurality of support portions 641 arranged in the first direction. The clearance hole 6302 is defined between two adjacent support portions 641. The expansion beam body 65 is made by an extrusion process and the expansion beam body 65 is mounted on the support beam 64.

The first heat exchange assembly 30 includes a first heat exchange member 31, and the first heat exchange member 31 includes a heat exchange body 312 and a current collector 315.

The heat exchange body 312 is arranged inside the box body 21 and located between the first expansion beam 61 and the second expansion beam 62. The heat exchange body 312 includes a plurality of heat exchange tubes 314, each of the heat exchange tubes 314 defining a heat exchange flow channel 310. The heat exchange flow channel 310 includes a first heat exchange portion 3101 and a second heat exchange portion 3104. The first heat exchange portion 3101 includes a plurality of first heat exchange segments 3102 and a plurality of first bent segments 3103. The plurality of first heat exchange segments 3102 are arranged in a first direction and each of the first heat exchange segments 3102 extends in a second direction. Adjacent two first heat exchange segments 3102 are connected through the first bent segment 3103, and therefore, the plurality of first heat exchange segments 3102 and the plurality of first bent segments 3103 are connected sequentially to form a multi-bent structure. The second heat exchange portion 3104 is arranged on the outer periphery of the first heat exchange portion 3101.

There are two current collectors 315 located on one side of the heat exchange body 312. One of the current collectors 315 is connected to one end of the two heat exchange tubes 314, and the other current collector 315 is connected to the other end of the two heat exchange tubes 314. The two current collectors 315 pass through two clearance holes 6302 on the first expansion beam 61, so that the current collectors 315 can be in communication with a water nozzle through a hose 316.

The battery cell assembly 101 is arranged inside the box body 21 and located above the first heat exchange member 31. The battery cell assembly 101 includes a plurality of battery units 102, and the plurality of battery units 102 are arranged in the second direction. Each of the battery units 102 includes a plurality of battery cells 10, and the plurality of battery cells 10 in each of the battery units 102 are arranged in the first direction. A bottom of each of the battery units 102 is in contact with at least two first heat exchange segments 3102.

The first mounting beam 81 and the second mounting beam 82 are located externally to the box body 21 and on opposite sides of the box body 21. The first mounting beam 81 and the second mounting beam 82 are arranged at an interval in the first direction, and length directions of the first mounting beam 81 and the second mounting beam 82 both extend in the second direction.

The bottom guard plate 90 is located externally to the box body 21 and is arranged opposite to the bottom wall 211 of the box body 21. The opposite sides of the bottom guard plate 90 are connected to the first mounting beam 81 and the second mounting beam 82, respectively.

Referring to FIG. 7 again, according to other embodiments of the present application, there is one current collector 315 in the first heat exchange member 31, and the current collector 315 has a plurality of first flow channel interfaces 3152 and a plurality of second flow channel interfaces 3153. First inlets/outlets 3109a of the plurality of heat exchange flow channels 310 are in communication with the plurality of first flow channel interfaces 3152 in a one-to-one correspondence, and second inlets/outlets 3109b of the plurality of heat exchange flow channels 310 are in communication with the plurality of second flow channel interfaces 3153 in a one-to-one correspondence. In this embodiment, other structures of the battery 100 may be the same as the structure of the battery 100 shown in FIG. 6.

Referring to FIG. 13 again, according to other embodiments of the present application, the heat exchange body 312 is a heat exchange plate 313 and includes a first plate portion 3131 and a second plate portion 3132. The plurality of heat exchange flow channels 310 are defined between the first plate portion 3131 and the second plate portion 3132.

There are two current collectors 315 located on one side of the heat exchange body 312. One of the current collectors 315 is connected to the first inlets/outlets 3109a of the plurality of heat exchange flow channels 310, and the other current collector 315 is connected to the second inlets/outlets 3109b of the plurality of heat exchange flow channels 310. The two current collectors 315 pass through two clearance holes 6302 on the first expansion beam 61, so that the current collectors 315 can be in communication with the water nozzle through the hose 316.

Referring to FIG. 23 again, according to still other embodiments of the present application, the heat exchange body 312 includes a plurality of heat exchange tubes 314. The plurality of heat exchange tubes 314 are arranged in the second direction. Each of the heat exchange tubes 314 includes a first tube segment 3141 and two second tube segments 3142. A length direction of the first tube segment 3141 extends in the first direction, and length directions of the second tube segments 3142 extend in the third direction. Lower ends of the two second tube segments 3142 are in communication with two ends of the first tube segment 3141 in its length direction.

The current collector 315 includes a first current collecting tube 3157 and a second current collecting tube 3158, the first current collecting tube 3157 and the second current collecting tube 3158 are arranged oppositely in the first direction, length directions of the first current collecting tube 3157 and the second current collecting tube 3158 both extend in the second direction, and each of the plurality of heat exchange tubes 314 has one end in communication with the first current collecting tube 3157 and the other end in communication with the second current collecting tube 3158.

In this embodiment, the first expansion beam 61 includes a plurality of inner support plates 662, reinforcing plates 663, and outer support plates 661 that are arranged and connected in the second direction. The inner support plates 662, reinforcing plates 663, and outer support plates 661 are all made by a stamping process. Tops of both ends of the first expansion beam 62 are each provided with a clearance hole 6302 to avoid the first current collecting tube 3157 and the second current collecting tube 3158.

According to some embodiments of the present application, the present application further provides an electrical apparatus 1000, including the battery 100 according to the above solution, and the battery 100 is configured to provide electrical energy for the electrical apparatus 1000.

The electrical apparatus 1000 may be the above device or system using the battery 100.

Since the battery 100 according to the present application has the above-mentioned technical effects, the electrical apparatus 1000 according to the present application also has the above-mentioned technical effects. That is, by using the battery 100, the reliability of the electrical apparatus 1000 can be improved, the production efficiency of the electrical apparatus 1000 can be increased, and the cost can be reduced.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, which should all be covered within the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery, comprising:
a box body assembly comprising a box body, the box body being an integrally stamped member with a bottom wall and an enclosure;
a battery cell assembly arranged inside the box body assembly and fixedly connected to the bottom wall of the box body; and
a first heat exchange assembly arranged inside the box body assembly and configured to exchange heat with the battery cell assembly.

2. The battery according to claim 1, wherein the first heat exchange assembly comprises a first heat exchange member, and the first heat exchange member comprises:
a heat exchange body, the heat exchange body being at least partially arranged between the bottom wall of the box body and the battery cell assembly, and the heat exchange body having a heat exchange flow channel; and
a current collector in communication with the heat exchange flow channel.

3. The battery according to claim 2, wherein an inner face of the bottom wall of the box body has an accommodating groove, and the heat exchange body is at least partially arranged in the accommodating groove.

4. The battery according to claim 3, wherein the heat exchange flow channel comprises a first heat exchange portion, the first heat exchange portion comprises a plurality of first heat exchange segments arranged at intervals, and the accommodating groove comprises a plurality of first groove segments arranged at intervals, the plurality of first heat exchange segments being arranged in the plurality of first groove segments in a one-to-one correspondence.

5. The battery according to claim 4, wherein the battery cell assembly comprises a plurality of battery units, each of the battery units comprises a plurality of battery cells, the plurality of battery cells of each of the battery units are arranged in the first direction, the plurality of battery units are arranged in the second direction, and the first direction and the second direction are arranged to form an angle; and
wherein the plurality of first heat exchange segments are arranged at intervals in the first direction, each of the plurality of first heat exchange segments extends in the second direction, the plurality of first groove segments are arranged at intervals in the first direction, and each of the first groove segments extends in the second direction.

6. The battery according to claim 5, wherein the first heat exchange portion further comprises a first bent segment, and the first bent segment is arc-shaped and is bent and connected between two adjacent first heat exchange segments; and
the accommodating groove further includes a connecting groove segment, the connecting groove segment is arc-shaped and is bent and connected between two adjacent first groove segments, and the first bent segment is arranged in the connecting groove segment.

7. The battery according to claim 5 or 6, wherein the heat exchange flow channel further comprises a second heat exchange portion, the second heat exchange portion is bent to form a U-shaped region, one end of the first heat exchange portion is bent and connected to one end of the second heat exchange portion, the first heat exchange portion is bent and arranged within the U-shaped region, and the first heat exchange portion and the second heat exchange portion are bent in a same plane; and
the accommodating groove further comprises a second groove segment, one end of the second groove segment is bent and connected to one end of the first groove segment, the shape of the second groove segment is the same as the shape of the second heat exchange portion, and the second heat exchange portion is arranged in the second groove segment.

8. The battery according to claim 6 or 7, wherein there is one heat exchange flow channel.

9. The battery according to claim 6 or 7, wherein there are a plurality of heat exchange flow channels, and the plurality of heat exchange flow channels are arranged in parallel, with their projections on the bottom wall of the box body not overlapping.

10. The battery according to any one of claims 3 to 9, wherein the heat exchange body comprises a flat tube, and the flat tube defines the heat exchange flow channel, the flat tube is arranged in the accommodating groove, and two walls of the flat tube arranged opposite each other in a thickness direction are respectively fixedly connected to the battery cell assembly and the bottom wall of the box body assembly.

11. The battery according to any one of claims 3 to 9, wherein the first heat exchange body comprises a heat exchange plate, and the heat exchange plate comprises:
a first plate portion; and
a second plate portion, the second plate portion covering one side of the first plate portion in a thickness direction, and a heat exchange flow channel being defined between the second plate portion and the first plate portion;
wherein the first plate portion is fixedly connected to the battery cell assembly, the second plate portion is fixedly connected to the bottom wall of the box body assembly, the second plate portion has a protrusion, and the protrusion is arranged in the accommodating groove.

12. The battery according to any one of claims 2 to 11, wherein the current collector comprises:
a tube body;
a first flow channel interface, the first flow channel interface being connected to a first inlet/outlet of the heat exchange flow channel;
a second flow channel interface, the second flow channel interface being connected to a second inlet/outlet of the heat exchange flow channel; and
a partition structure, the partition structure being arranged inside the tube body, and the partition structure separating the first flow channel interface and the second flow channel interface inside the tube body.

13. The battery according to claim 12, wherein there are a plurality of heat exchange flow channels, a plurality of first flow channel interfaces, and a plurality of second flow channel interfaces;
wherein the plurality of first flow channel interfaces correspond one-to-one with and are connected to the first inlets/outlets of the plurality of heat exchange flow channels, and the plurality of second flow channel interfaces correspond one-to-one with and are connected to the second inlets/outlets of the plurality of heat exchange flow channels.

14. The battery according to claim 13, wherein the plurality of first flow channel interfaces are in communication inside the tube body; and/or, the plurality of second flow channel interfaces are in communication inside the tube body.

15. The battery according to any one of claims 2 to 11, wherein there are a plurality of heat exchange flow channels and two current collectors, one of the current collectors has a plurality of liquid inflow interfaces, and the plurality of liquid inflow interfaces correspond one-to-one with and are connected to the first inlets/outlets of the plurality of heat exchange flow channels, and the other one of the current collectors has a plurality of liquid outflow interfaces, and the plurality of liquid outflow interfaces correspond one-to-one with and are connected to the second inlets/outlets of the plurality of heat exchange flow channels.

16. The battery according to claim 4, wherein the battery cell assembly comprises a plurality of battery units, each of the battery units comprises a plurality of battery cells, the plurality of battery cells of each of the battery units are arranged in the first direction, the plurality of battery units are arranged in the second direction, and the first direction and the second direction are arranged to form an angle; and
wherein the plurality of first heat exchange segments are arranged at intervals in the second direction, each of the plurality of first heat exchange segments extends in the first direction, the plurality of first groove segments are arranged at intervals in the second direction, and each of the first groove segments extends in the first direction.

17. The battery according to claim 16, wherein the heat exchange body comprises a plurality of heat exchange tubes, the plurality of heat exchange tubes are arranged at intervals in the second direction, and each of the heat exchange tubes defines the first heat exchange segment.

18. The battery according to claim 17, wherein each of the heat exchange tubes comprises:
a first tube segment, the first tube segment extending in the first direction and defining the first heat exchange segment; and
two second tube segments, the two second tube segments both extending in a third direction, with one end of each of the two first tube segments in communication with both ends of the first tube segment and the other end in communication with the current collector.

19. The battery according to claim 17 or 18, wherein the heat exchange tube is a flat tube.

20. The battery according to claim 19, wherein the heat exchange tube is provided with a reinforcing member.

21. The battery according to claim 20, wherein the reinforcing member comprises a plurality of reinforcing ribs, the plurality of reinforcing ribs are arranged at intervals in the second direction, and each of the reinforcing ribs is supported between two walls of the heat exchange tube arranged opposite each other in its thickness direction.

22. The battery according to any one of claims 17 to 21, wherein the heat exchange body further comprises a fixing member, the fixing member is arranged between two adjacent heat exchange tubes, and the heat exchange body is connected to the box body through the fixing member.

23. The battery according to claim 22, wherein the box body is provided with a first fixed beam and a second fixed beam, the first fixed beam and the second fixed beam are arranged at an interval in the first direction and their length directions both extend in the second direction, and the battery cell assembly is located between the first fixed beam and the second fixed beam;
wherein the fixing member is connected to the box body through the first fixed beam or the second fixed beam.

24. The battery according to any one of claims 17 to 23, wherein the current collector comprises:
a first current collecting tube and a second current collecting tube, the first current collecting tube and the second current collecting tube are arranged at an interval in the first direction and their length directions both extend in the second direction, and both ends of each of the heat exchange tubes are in communication with the first current collecting tube and the second current collecting tube respectively.

25. The battery according to claim 2, wherein the battery cell assembly comprises a plurality of battery units, each of the battery units comprises a plurality of battery cells, the plurality of battery cells of each of the battery units are arranged in the first direction, the plurality of battery units are arranged in the second direction, and the first direction and the second direction are arranged to form an angle; and
the box body is provided with an expansion beam, the expansion beam comprises a first expansion beam and a second expansion beam, the first expansion beam and the second expansion beam are arranged at an interval in the second direction and their length directions both extend in the first direction, each of the first expansion beam and the second expansion beam has a cavity, and the battery cell assembly is located between the first expansion beam and the second expansion beam.

26. The battery according to claim 25, wherein the box body is provided with a first fixed beam and a second fixed beam, the first fixed beam and the second fixed beam are arranged at an interval in the first direction and their length directions both extend in the second direction, and the battery cell assembly is located between the first fixed beam and the second fixed beam;
wherein two ends of each of the first expansion beam and the second expansion beam are connected to the first fixed beam and the second fixed beam respectively through a first fastener.

27. The battery according to claim 25 or 26, wherein at least one of the first expansion beam and the second expansion beam has a clearance hole for avoiding the current collector and/or the heat exchange body.

28. The battery according to claim 27, wherein at least one of the first expansion beam and the second expansion beam comprises:
a support beam, the support beam extending in the first direction and fixedly connected to the bottom wall of the box body, and the support beam defining the clearance hole; and
an expansion beam body, the expansion beam body extending in the first direction and connected to the support beam, and the expansion beam body defining the cavity.

29. The battery according to claim 28, wherein the support beam comprises a plurality of support portions arranged at intervals in the first direction, with the clearance hole defined between two adjacent support portions.

30. The battery according to claim 29, wherein the expansion beam body comprises:
a main body part, at least a portion of the main body part being arranged on a side of the plurality of support portions facing the battery cell assembly; and
a connecting portion, the connecting portion being connected to a side of the main body part facing away from the battery cell assembly, and the connecting portion being connected to a side of the plurality of support portions facing away from the bottom wall of the box body;
wherein the main body part and the connecting portion respectively cover at least a portion of the clearance hole.

31. The battery according to any one of claims 28 to 30, wherein the support beam is welded to the bottom wall of the box body, and the expansion beam body is connected to a side of the support beam facing away from the bottom wall of the box body by a second fastener.

32. The battery according to any one of claims 28 to 31, wherein the expansion beam body is manufactured using an extrusion process to define the cavity.

33. The battery according to claim 27, wherein at least one of the first expansion beam and the second expansion beam comprises:
a plurality of plates, the plurality of plates being stacked and connected in the second direction, the plates extending in the first direction, the cavity being defined between at least two of the plates, and the clearance hole penetrating through the plurality of plates.

34. The battery according to claim 33, wherein the plate is manufactured using an extrusion process.

35. The battery according to claim 27, wherein in the second direction, the current collector is connected to one side of the heat exchange body, and the clearance hole is provided on a side of the first expansion beam or the second expansion beam facing the bottom wall of the box body.

36. The battery according to claim 27, wherein the current collector comprises:
a first current collecting tube and a second current collecting tube, the first current collecting tube and the second current collecting tube being arranged at an interval in the first direction and their length directions both extending in the second direction, and the clearance hole being arranged on a side of the first expansion beam or the second expansion beam facing away from the bottom wall of the box body.

37. The battery according to any one of claims 25 to 36, wherein at least one of the first expansion beam and the second expansion beam is connected to a support member on a side facing away from the battery cell assembly, and the support member is connected to the bottom wall of the box body or the enclosure of the box body.

38. The battery according to any one of claims 25 to 37, wherein the first expansion beam is provided with a first mounting member, the second expansion beam is provided with a second mounting member, the battery further comprises a pull rope, and two ends of the pull rope are respectively connected to the first mounting member and the second mounting member.

39. The battery according to claim 38, wherein there are a plurality of first mounting members, a plurality of second mounting members, and a plurality of pull ropes, the plurality of first mounting members and the plurality of second mounting members being respectively arranged in the first direction, and two ends of the plurality of pull ropes respectively connected to the plurality of first mounting members and the plurality of second mounting members in a one-to-one correspondence.

40. The battery according to any one of claims 2 to 39, wherein the battery cell assembly comprises a plurality of battery units, each of the battery units comprises a plurality of battery cells, the plurality of battery cells of each of the battery units are arranged in the first direction, the plurality of battery units are arranged in the second direction, and the first direction and the second direction are arranged to form an angle; and
the first heat exchange assembly further comprises a second heat exchange member, the second heat exchange member being arranged between two adjacent battery units.

41. The battery according to any one of claims 1 to 40, wherein the box body assembly further comprises a box cover, the box cover being connected above the box body and having a top wall; and
the first heat exchange assembly further comprises a third heat exchange member, the third heat exchange member being located at least partially between a top wall of the box cover and the battery cell assembly.

42. The battery according to any one of claims 1 to 41, further comprising:
a second heat exchange assembly, the second heat exchange assembly being attached externally to the box body.

43. An electrical apparatus, comprising the battery according to any one of claims 1 to 42.
